# EUROPEAN PATENT APPLICATION

(11) **EP 1 975 864 A1**
(43) Date of publication of application: **01.10.2008**
(21) Application number: 07706871.6
(22) Date of filing: 10.01.2007
(51) Int. Cl.: G06Q 10/00, G06Q 30/00

(54) **RESOURCE EXPLOITATION SUPPORTING METHOD, INFORMATION PROCESSING DEVICE, AND COMPUTER PROGRAM**

(30) Priority: 10.01.2006 JP 2006002888
(71) Applicant: Ted Impact Co., Ltd., Chuo-ku Tokyo 103-0012 (JP)
(72) Inventor: TAKEMOTO, Junichi, Tokyo 103-0012 (JP); KUROSU, Satoshi, Yokohama-shi Kanagawa 223-0064 (JP); IMAI, Yoshio, Tokyo 134-0081 (JP); SUZUKI, Mitsuko, Saitama 340-0015 (JP)
(74) Representative: Brown, Kenneth Richard
(86) International application number: PCT/JP2007/050544
(87) International publication number: WO 2007/081038

(57) **Abstract**

Provided is a network system for resource exploitation support, which matches an enterprise and demand/supply of a business resource. The network system includes a server device (2) and a plurality of terminal devices (1) that are connected via a wide-area network (WN). The plurality of terminal devices (1) each generate quantitative data group obtained by quantifying a feature of a resource to be a demand candidate or a supply candidate from a plurality of viewpoints, and common data obtained by expressing feature information for presenting the feature of the resource in question to a user in a data format commonly recognizable in the network system, to transmit the quantitative data group and the common data to the server device (2). The server device (2) accumulates the quantitative data group and the common data from each of the terminal devices (1) in a demand/supply DB by demand and supply of the resource, and determine a matching degree of demand and supply between a demander and a supplier of the resource by making a comparison of the features represented by the quantitative data groups, to enable providing the terminal device (1) concerning the demander with the common data of the supplier whose matching degree is within a predetermined range and, on the other hand, enable providing the terminal device (1) concerning the supplier with the common data of the demander whose matching degree is within the predetermined range.

## Description

### Technical Field

The present invention relates to a computer network technology for resource exploitation support, which enables providing the right resource to the right place. Resources herein include, for example, personnel involved in enterprise business, materials, funds, information, intellectual properties, and information on an enterprise project under contemplation. Among those resources, a resource used for business is particularly referred to as a business resource. Further, the intellectual properties, which are one type of resources, refer to such registered rights as patents, trademark rights, design rights, utility model patents, and copyrights, as well as intellectual creations prior to entitlement in general, including inventions, contrivances, designs, trademarks, know-how, and research data. For example, literary works are intellectual properties. In this description, the intellectual property is abbreviated to "IP" unless used as a keyword. In addition, among the intellectual properties, an intellectual property that can be managed as a separate entity through, for example, buying, transferring, licensing in, and licensing out, is referred to as "IP tool".

### Background of the Invention

In an enterprise business strategy, a business resource, in particular, an IP tool plays a significant role. The IP tool is created uniquely by an organization or an individual, and also, in many cases, the IP tool created by another organization or another individual is acquired through a transaction. Conventionally, transactions of IP tools have been achieved only through a negotiated transaction with a familiar other party. In other words, conventionally, main distribution methods for IP tools have been individual negotiations via a license section of a company or the like. For example, the individual negotiations have been conducted as follows. After a nondisclosure agreement is signed, confidential information is disclosed, and transaction terms and conditions are offered to each other during a trial period of a sample. Such a way of individual negotiation normally requires a large amount of cost and time of a transaction partner for performing a search. Hence, such an individual negotiation tends to hinder smooth distribution of the IP tools and the exploitation thereof.

In order to vitalize the distribution of IP tools, there have been proposed various systems in which buying and selling of IP tools or license mediation is conducted through a web site established on the Internet. For example, JP 2004-78525 A, JP 2004-78524 A, JP 2004-62669 A, JP 2003-337892 A, JP 2003-331160 A, and JP 2003-331159 A disclose an intellectual property right buying/selling system, in which contents of an intellectual property right to be sold and terms of sale thereof (inventive step can be seen in calculation of evaluation price or the like) are put on a server for web sites, and an application of a bidding determined to be valid is accepted.

In addition, JP 2002-99776 A discloses an intellectual property right transacting method for promoting a transaction of a right on an intellectual property by means of a network, in which: a transaction provider sets a plurality of transaction conditions by using a transaction providing device so that an advantageous condition is given to a person applying for the transaction of the right earlier than to a person applying for the transaction later; a server discloses the details and the transaction condition of the right; and a transaction receiver selects the transaction condition and applies for the transaction.

Further, JP 2003-331154 A discloses a technology transfer support system for supporting technology transfer including buying/selling and licensing of an intellectual property, in which: a technical summary, a person (buyer, seller, or agent) involved in the technology transfer, a request content, a specialty field, and the like are registered; matching is performed by searching for an optimum combination of the registered contents or by providing ratings according to matching degrees of terms used in the registered contents; and a result of the searching or the matching is provided to the person involved in the technology transfer.

The conventional systems as described above are extremely convenient in terms of, for example, reducing costs on search for an offering side (supplier) of an IP tool and a receiving side (demander) of the offer. However, in actuality, the distribution of IP tools in the market has not necessarily been vitalized. The reasons for that are considered to be as follows.
(1) Enterprise strategy and IP strategy are not linked.
   In general, the "strategy" means a basic policy for leading environmental changes toward a favorable direction for one's own convenience. The IP strategy that is apart from the enterprise strategy is impractical due to the lack of exploitation of the IP tools. Conversely, the enterprise strategy that lacks an IP strategy perspective is risky due to the high possibility of being affected by IP tools or the like of another party. In other words, like real estate, the IP strategy cannot be determined without a perspective as to how the IP tools are exploited for what enterprise. However, in many organizations, the IP strategy, that is, a guideline for IP exploitation is not necessarily clear.
(2) Enterprise strategy exploiting IP tools is top secret.
   For example, for a company concerning technological development, making its own IP strategy public means a disclosure of company secrets. For example, information on what IP tool is required or is not required by an own company makes a good material for another company to figure out the business policy of the own company in advance. It is common for most companies to keep the IP strategies thereof from being exposed to the outside. Besides, in general, it is impossible to achieve price formation based on market mechanisms by putting IP tools into open markets. A transaction always has to be a confidential relationship between the two parties concerned.
(3) Exploitation of accumulated IP tools is insufficient.
   Some of the unused IP tools cannot be commercialized by an organization alone that owns the IP tools. However, in some cases, by changing a combination of IP tools, a combination of an IP tool and an enterprise plan, or a combination of an IP tool and another business resource from the respective existing combinations, an unexpected value may be created. However, conventionally, there has been no system for putting the right thing to the right place, which obtains an optimum solution of matching between a business strategy and such a business resource as an IP tool.
(4) Matching of needs is a unique issue.
   Information on the inside of an organization that has created an IP tool or information on the industry is normally best known to a person within the organization. Accordingly, in "mass" transactions of IP tools in the IP distribution markets, it is impossible to match needs from the demanders and the suppliers.
(5) Exchanging resources other than IP tools is difficult.
   In general, technology transfer to another company of the same trade or licensing IP tools results in weakening of the competitiveness of the company concerned. Exchange of human resources has a problem with regard to confidentiality. For the above-mentioned problems to be solved, the existing business resources have to be divided into individual elements for optimization thereof, which requires a considerable amount of energy.

In general, regardless of whether or not a market is for IP tools, transaction markets for tradable resources are established based on a relationship between "push" from the supplier and "pull" from the demander. In many cases, the push is carried out from a strategic viewpoint of an enterprise. For example, the push tends to be carried out on the occasion of strategic licensing out of a resource, inventory clearance, rationalization of sections, or the like. On the other hand, most examples of the pull are passive, including conflict prevention, preventive action against another company of the same trade, enterprise restructuring, and the like. For the above-mentioned reasons regarding IP tools, conventionally, pressures from the push and the pull have not been exerted on the inside of organizations.

However, the push and the pull are essential for the enterprise concerned to be vitalized through effective exploitation of the resources. Thus, creation of the push and the pull is necessary for dominating the market and leading the enterprise/business strategy to success. What should be done for creating the push and the pull is to incorporate, for example, an information organizing mechanism for the enterprise strategy, in particular, an information organizing mechanism for hedging the risk caused by the push. Further, what should be done for creating the pull is, for example, when there is a resource that one wants to supply or a resource that may be supplied, to turn the resource into "something desired" by another company, and to establish a model in which a resource to be a pillar of the enterprise strategy is procured from the outside.

At the moment, there exists no system in which transaction management of resources is performed in a unifying manner from the strategic perspective within a company. In addition to information being enormous and complex, the information within the company alone does not provide sufficient data for performing an effective judgment.

A primary object of the present invention is to propose a new mechanism for resource exploitation support, which obtains an optimum solution of matching, for example, between an enterprise strategy and a business resource, thereby enabling putting the right resource to the right place.

### Disclosure of the Invention

The present invention provides an exploitation supporting method for a resource, which is executed by a plurality of devices connected with one another via a network, an information processing device for a network system, which is suitable for implementing the method, and a computer program for realizing such an information processing device with a computer.

The exploitation supporting method for a resource provided by the present invention is a method executed by a server device and a plurality of user devices that are connected with one another via the network, and is a method including the following steps as procedures for the execution thereof:
(1-1) the step of converting, by a first user device operated by a user who is a possible demander of the resource to be an exploitation target and a second user device operated by a user who is a possible supplier of the resource, a feature of the resource into a quantitative data group, respectively, in a data format recognizable for the server device through quantification based on a plurality of types of assessment rules different in viewpoint from one another, and converting feature information for notifying another user of the resource into common data in a data format recognizable for the server device and another user device, to transmit the quantitative data group and the common data to the server device along with a demand/supply ID (ID is the abbreviation of identification information, same hereinbelow) for identifying the demander or the supplier of the resource; and
(1-2) the step of accumulating, by the server device, the quantitative data groups and the common data received from the first user device and the second user device in a predetermined storage device in association with the respective demand/supply IDs, and determining a matching degree between demand and supply of the resource by making, for each pair of the demander and the supplier identified by the demand/supply IDs, a comparison of the features represented by the accumulated quantitative data groups, to enable providing the first user device with the common data of the supplier whose matching degree is within a predetermined range and, on the other hand, to enable providing the second user device with the common data of the demander whose matching degree is within the predetermined range.

In comparison with a conventional technology, in particular, a technology regarding technology transfer support described in JP 2003-331154 A, with the technology according to the present invention, the feature of the resource is converted into the quantitative data group, that is, a set of a plurality of pieces of quantitative data, which is recognizable for the server device, and a comparison between the quantitative data group of the demander and the quantitative data group of the supplier is made by the server device. Accordingly, compared with the conventional technology in which matching is performed with ratings according to matching degrees of respective terms, it is possible to dramatically enhance appropriateness of the matching degrees between the demand and the supply. Further, in addition to the conversion into the quantitative data group, the feature information regarding the resource is converted into the common data recognizable for the another user device to thereby provide the user who is the possible demander and the user who is the possible supplier with the common data of the supplier and the common data of the demander, respectively. As a result, in addition to the matching by information processing like the conventional technology, the user can check the accuracy of matching degree determination in an analog manner.

According to an embodiment mode of the exploitation supporting method, the first user device and the second user device each transmit, to the server device, an indirect ID for indirectly identifying an attribute of the user operating the user device. On the other hand, the server device is configured to: accumulate the indirect ID received from each of the user devices in the storage device in association with the common data from the user device in question; and enable, when providing the common data of the supplier to the first user device, providing the indirect ID of the supplier in question and conceal the indirect ID of another demander, and enable, on the other hand, when providing the common data of the demander to the second user device, providing the indirect ID of the demander in question and conceal the indirect ID of another supplier. With this configuration, the attribute of the other party can be indirectly obtained by each other between the demander and the supplier, while the existence of the other demanders or the existence of the other suppliers is concealed. As a result, information on the demand and the supply of the resource can be obtained in a closed environment.

From the perspective of convenience for the demander, the server device is configured to: acquire at least one of assessment information indicating an assessment result of a third party with respect to the resource and supporting information indicating an example of an exploitation mode of the resource in question, to accumulate the acquired assessment information or the acquired supporting information in the storage device in association with the common data of the supplier; and enable, when providing the common data in question, providing the at least one of the assessment information and the supporting information therewith. With this configuration, the objectivity with respect to the resource to be a supply target is maintained, thereby enabling information that is effective for a transaction judgment to be provided to the user of the demander.

In general, the user, regardless of whether the user is the demander or the supplier, performs a further information search after information is transmitted from the server device to thereby make the transaction judgment. In response to this fact, according to the present invention, the server device includes: a keyword DB storing a plurality of keywords regarding exploitation of the resource; and a relevance table associating, for each of the keywords, IDs of a plurality of association keywords associated with the keyword in question with respective appearance frequencies in source document data. In addition, the server device extracts, from the keyword DB, upon reception of a search request along with a search keyword candidate from the first user device or the second user device, based on recorded information of the relevance table, some association keywords that are associated with the keyword matching the search keyword candidate in question and have the appearance frequency within a predetermined range, to enable providing each of the extracted association keywords, as a potential search keyword, to the user device that is a transmission source of the search request.

From the perspective of making the recorded information of the relevance table more effective, the server device is configured to record, every time detection is made that any one of the association keywords provided to the user device of the transmission source has been adopted as a search keyword, information indicating a utilization degree of the association keyword in a field of the relevance table associated with the ID of the association keyword in question. Further, in order to allow the user to "discover" more things, the server device may be configured to identify, from the recorded information of the relevance table, at least any one of some association keywords with relatively high appearance frequencies, some association keywords with relatively low appearance frequencies, and association keywords having the appearance frequencies within a range specified by the user device of the transmission source, to extract the identified association keywords.

The information processing device according to the present invention includes a first information processing device, which operates as the aforementioned first user device or the second user device, and a second information processing device, which operates as the aforementioned server device.

The first information processing device is a device constituting a network system for resource exploitation support along with the server device connected via a network, and includes the following components:
(2-1) first data converting means for allowing a user operating an own device to convert a feature of a resource to be a demand target or a supply target into a quantitative data group in a data format recognizable for the server device through quantification based on a plurality of types of assessment rules different in viewpoint from one another;
(2-2) second data converting means for converting feature information for allowing another user to recognize the feature of the resource into common data in a data format recognizable for the server device and another information processing device;
(2-3) communication means for transmitting the quantitative data group and the common data to the server device along with a demand/supply ID for identifying a demander or a supplier of the resource, and receiving any one of supplier information including the common data of the supplier and demander information including the common data of the demander from the server device that has made, for each pair of the demander and the supplier identified by the demand/supply IDs, a comparison of the features represented by the quantitative data groups; and
(2-4) output control means for enabling the supplier information or the demander information received by the communication means to be presented to the user via a predetermined output device.

In order to transmit unpredictable feature information to another user, the information processing device may further include an association supporting DB that has accumulated serendipity information, the serendipity information being information set for each keyword and associable with the keyword in question, and being selected by a person other than the user or generated as a result of an action of the person other than the user. The second data generating means may be configured to extract, from the association supporting DB, the serendipity information corresponding to the keyword contained in the feature information, and put the extracted serendipity information in the feature information in question to convert the feature information into the common data. Further, the first data generating means may be configured to extract, from the association supporting DB, the serendipity information corresponding to the keyword contained in the feature of the resource, and put the extracted serendipity information in the feature of the resource in question to convert the feature of the resource into the quantitative data group.

The second information processing device is an information processing device constituting a network system for resource exploitation support along with a plurality of user devices, and includes the following components:
(3-1) reception means for receiving, from each of the user devices, a quantitative data group obtained by quantitatively converting a feature of a resource to be a demand target or a supply target into a data format recognizable for an own device based on a plurality of types of assessment rules different in viewpoint from one another, and common data obtained by converting feature information for allowing another user device to recognize the resource into a data format recognizable for the own device and the another user device, along with a demand/supply ID for identifying a demander or a supplier of the resource;
(3-2) a demand/supply DB for accumulating the quantitative data group and the common data received from the each of the user devices in association with the demand/supply ID; and
(3-3) demand/supply management means for determining a matching degree between demand and supply by making, for each pair of the demander and the supplier identified by the demand/supply IDs, a comparison of the features represented by the quantitative data groups accumulated in the demand/supply DB, to enable providing the user device concerning the demander with supplier information including the common data of the supplier whose matching degree is within a predetermined range and, on the other hand, to enable providing the user device concerning the supplier with demander information including the common data of the demander whose matching degree is within the predetermined range.

From the perspective of enabling exploitation support of a business resource in a closed environment, the demand/supply management means is configured to conceal, if the demander of the resource includes a plurality of demanders, existence of another demander when providing the supplier data, and conceal, on the other hand, if the supplier of the resource includes a plurality of suppliers, existence of another supplier when providing the common data of the demander.

The second information processing device also may be configured to include the following components:
(3-4) a keyword DB for storing a plurality of keywords along with IDs for identifying the respective keywords;
(3-5) keyword management means for determining any one of the keywords stored in the keyword DB as a subject keyword and determining, from among a plurality of keywords excluding the subject keyword that have been extracted from source document data, each keyword identical to one of the keywords stored in the keyword DB as an association keyword, to derive an appearance frequency of each association keyword in the source document data;
(3-6) table management means for extracting, from the keyword DB, the ID of the subject keyword and the ID of the obtained each association keyword, respectively, and associating the subject keyword with the ID of the each association keyword and the appearance frequency derived with respect to the each association keyword, to generate a relevance table indicating relevance between the subject keyword in question and the each association keyword or update recorded information of the relevance table;
(3-7) keyword candidate reception means for receiving an input of a search keyword candidate for searching for information regarding the resource exploitation support; and
(3-8) search means for examining whether or not the relevance table of the subject keyword matching the search keyword candidate received by the keyword candidate reception means is present, and when present, extracting from the keyword DB, based on a plurality of the IDs recorded in the relevance table in question, the association keywords corresponding to the respective IDs, to provide each of the extracted association keywords as a potential search keyword that can be adopted as the search keyword to a transmission source of the search keyword candidate.

The keyword management means, for example, counts the appearance frequencies of a plurality of extract keywords in a subject field, which have been extracted from the subject field in question of the source document data, and performs a search as to whether or not the keyword identical to one of the extract keywords is stored in the keyword DB to determine, when stored, the keyword identical to the extract keyword with a highest appearance frequency as the subject keyword.

The second information processing device may be configured to further include detection means for detecting that any one of the respective association keywords provided to the transmission source has been adopted as the search keyword, and the table management means may be configured to cumulatively record a detection count by the detection means in the relevance table in association with the ID of the association keyword in question.

In order to allow the user who is a searcher to "discover" more things with respect to resource exploitation, search means may be configured to identify, from the recorded information of the relevance table, at least any one of the IDs of some association keywords with relatively high appearance frequencies, the IDs of some association keywords with relatively low appearance frequencies, the IDs of some association keywords with relatively high cumulative values of the detection count, the IDs of some association keywords with relatively low cumulative values, and the IDs of the association keywords within a range specified by the transmission source with respect to the appearance frequency or the cumulative value, to extract the association keywords corresponding to the specified IDs from the keyword DB.

A first computer program according to the present invention is a computer program for causing a computer to operate as a user device constituting a network system for resource exploitation support along with a server device connected via a network. The computer program for resource exploitation causes the computer to function as: first data converting means for allowing a user operating an own device to convert a feature of a resource to be a demand target or a supply target into a quantitative data group in a data format recognizable for the server device through quantification based on a plurality of types of assessment rules different in viewpoint from one another; second data converting means for converting feature information for allowing another user to recognize the resource into common data in a data format recognizable for the server device and another information processing device; communication means for transmitting the quantitative data group and the common data to the server device along with a demand/supply ID for identifying a demander or a supplier of the resource, respectively, and receiving any one of supplier information including the common data of the supplier and demander information including the common data of the demander from the server device that has made, for each pair of the demander and the supplier identified by the demand/supply IDs, a comparison of the features represented by the quantitative data groups; and output control means for enabling the supplier information or the demander information received by the communication means to be presented to the user via a predetermined output device.

A second computer program according to the present invention is a computer program for causing a computer having a storage device to operate as a server device constituting a network system for resource exploitation support along with a plurality of user devices accessible via a network. The computer program for resource exploitation support is for establishing a demand/supply DB in the storage device, and causes the computer to function as: reception means for receiving, from each of the user devices, a quantitative data group obtained by converting a feature of a resource to be a demand target or a supply target into a data format recognizable for an own device based on a plurality of types of assessment rules different in viewpoint from one another, and common data obtained by converting feature information for allowing another user device to recognize the resource into a data format recognizable for the own device and the another user device, along with a demand/supply ID for identifying a demander or a supplier of the resource; DB management means for accumulating the quantitative data group and the common data received from the each of the user devices in association with the demand/supply ID in the demand/supply DB; and demand/supply management means for determining a matching degree between demand and supply by making, for each pair of the demander and the supplier identified by the demand/supply IDs, a comparison of the features represented by the quantitative data groups accumulated in the demand/supply DB, to enable providing the user device concerning the demander with supplier information including the common data of the supplier whose matching degree is within a predetermined range and, on the other hand, to enable providing the user device concerning the supplier with demander information including the common data of the demander whose matching degree is within the predetermined range.

According to the present invention, to the user who is a possible demander of the resource, information on the supplier of the resource that matches the demand thereof is transmitted. In other words, it is possible to create the pull. On the other hand, to the user who is a possible supplier of the resource, information on the demander of the resource that matches the supply thereof is transmitted. In other words, it is possible to create the push. As a result, such a unique effect that enables concentration and selection of the resources of the demander and the supplier can be obtained.

In addition, both the user device concerning the demander and the user device concerning the supplier are provided with information indicating the content of the resource by means of the common data. As a result, it is possible to provide the user of the supplier and the user of the demander with such information that enables determining easily whether or not the resource matches the demand and whether or not the content of the resource is attractive to the user of the demander, respectively. In a case where the resource is an intellectual tool, it is extremely difficult to recognize the feature thereof properly, and hence, the aforementioned effect according to the present invention becomes even more remarkable.

### Brief Description of the Drawings

Fig. 1 is an overall configuration diagram of a network system that is an embodiment example of the present invention.
Fig. 2 is a functional block configuration diagram of a terminal device according to this embodiment.
Fig. 3 is a diagram showing a screen example of an interface when resource information that is classified focusing on IP tools is searched for.
In Figs. 4, Fig. 4 (a) is a diagram showing a screen example of arrangement/classification results of patents of an own company, Fig. 4 (b) is a diagram showing a screen example of a decision tree that is one of decision-making tools, and Fig. 4(c) is a diagram showing a screen example illustrating contents of human resources.
In Figs. 5, Fig. 5 (a) is a diagram showing a screen example of marketing information, Fig. 5 (b) is a diagram showing a screen example of financial information, and Fig. 5 (c) is a diagram showing a screen example of costs.
Fig. 6 is a diagram showing a content example of quantitative assessment rules.
In Figs. 7, Figs. 7 (a) and 7 (b) are diagrams showing contents example of respective correspondence rules.
In Figs. 8, Fig. 8 (a) is a diagram showing a structure example of relevance data, Fig. 8(b) is a diagram showing resource types in the relevance data, Fig. 8(c) is a diagram showing relevance ranges of the relevance data, and Fig. 8(d) is a diagram showing feature data (quantitative data group) of the relevance data.
In Figs. 9, Fig. 9 (a) is a diagram showing an example of the feature data including assessment results of five items and an total value thereof, Fig. 9 (b) is a diagram showing an example where the items are reduced to three, and Fig. 9(c) is a diagram showing an example of the feature data including assessment results of the items reduced as described in Fig. 9 (b) and an average value thereof.
Fig. 10 is an explanatory structure diagram of common data.
Fig. 11 is a functional block configuration diagram of a server device according to this embodiment.
Fig. 12 is an explanatory concept diagram of matching degree determination by the server device.
Fig. 13 is an explanatory diagram showing a specific example of the matching degree determination.
Fig. 14 is a configuration diagram of functions added to a server device according to a second embodiment of the present invention.
Fig. 15 is an explanatory diagram of an operational procedure for the server device when a relevance table for each subj ect keyword is generated.
Fig. 16 is an explanatory diagram of an operational procedure for the server device when association keywords are provided based on a search request.
Fig. 17 is a diagram showing a content example of the relevance table.
In Figs. 18, Fig. 18(a) is a diagram showing an example of a list of the association keywords, and Fig. 18 (b) is an explanatory diagram of the association keywords selected from the list by a user.

### Best Mode for carrying out the Invention

Hereinafter, a description will be made of embodiments of the present invention.

### <First embodiment>

### [Overall configuration diagram]

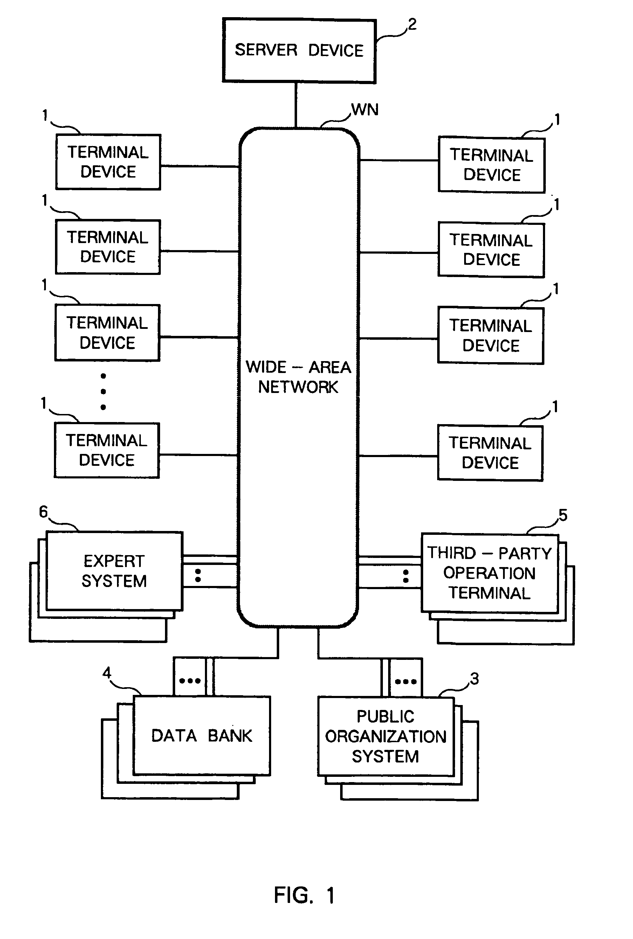

Fig. 1 shows an example of an overall configuration diagram of a network system to which the present invention is applied. This embodiment shows an example of a case where a resource to be a subj ect of exploitation support is the business resource for use in business involving an enterprise. The network system is configured by connecting a plurality of terminal devices 1 that each operates as a user device with a server device 2 that is, for example, installed in an organization for performing system management via a wide-area network WN such as the Internet. The terminal devices 1 are respectively installed in a corporation, a college, a Small Office Home Office, and the like (hereinafter, referred to as "own company" for convenience). In a case where the wide-area network WN is the Internet, the server device 2 can be implemented singly or as a Web system in a distributed processing mode to which grid computing or the like is applied. In addition, the server device 2 can be provided with the same function as the terminal device 1.

The wide-area network WN is also connected to a public organization system 3 such as a digital library of a patent office for providing information on IP tools, a data bank 4 installed in a privately-owned information provider organization, a third-party operation terminal 5 installed in a third-party organization to which experts on business, IP, laws, and the like belong, an expert system 6, and the like, and is configured so that various kinds of information useful in the exploitation of business resources can be appropriately acquired by the terminal devices 1 and the server device 2.

In the network system, each of the plurality of terminal devices 1 performs management of the business resources based on situations of the own company. In conducting a current enterprise or an enterprise to be conducted (hereinafter, such an enterprise will be referred to as "target enterprise"), if the current business resources turn out to be neither excessive nor insufficient for the own company, only the processing by the terminal device 1 suffices. On the other hand, if the current business resources are excessive or insufficient to accomplish the target enterprise, when an excess or insufficient amount thereof is to be transacted with the outside, information on demand/supply thereof, that is, information on demand for the insufficient resources or on supply of the excessive resources, is centralized on the server device 2.

The server device 2 stores the centralized information on the demand/supply received from each of the terminal devices 1 separately for each of the demand/supply, determines a matching degree thereof for each pair of demand and supply, and can provide the terminal device 1 to be a demander with information received from a supplier (supplier information) and various kinds of information to be added value of the resources in a state where existence of another demander is concealed. Further, the server device 2 can provide the terminal device 1 to be the supplier with information received from a demander (demander information) and information on added value of the resources in a state where existence of another supplier is concealed. First, a description will be made of an example of a configuration of the terminal devices 1 and the server device 2 which enables the above-mentioned operation.

### [Terminal device]

The terminal device 1 is a computer (information processing device) that operates by a terminal-purpose computer program. That is, a computer including a storage device such as a hard disk drive, an input device such as a keyboard/mouse, and an output device such as a display can implement the terminal device 1 by executing the terminal-purpose computer program according to the present invention. The terminal-purpose computer program is distributed by being recorded on a recording medium such as a disk in a computer-readable manner, or by being made downloadable from the server device 2 through the wide-area network WN.

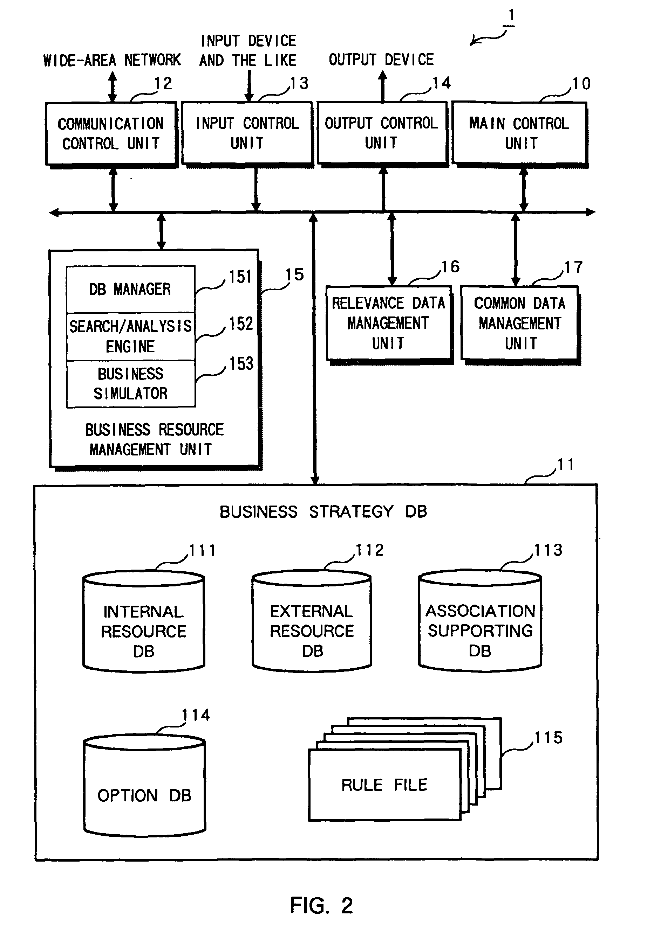

In this embodiment, as shown in Fig. 2, the terminal-purpose computer program is used to establish a business strategy DB 11 in the storage device, and causes the computer to function as a main control unit 10, a communication control unit 12, an input control unit 13, an output control unit 14, a business resource management unit 15, a relevance data management unit 16, and a common data management unit 17.

Under control of the business resource management unit 15, in the business strategy DB 11, a large amount of such supporting information is classified and accumulated so as to allow the right business resources caused by push creation and pull creation to be put in the right places. In this embodiment, such supporting information is accumulated by being classified into five types of DBs, that is, an internal resource DB 111, an external resource DB 112, an association supporting DB 113, an option DB 114, and rule files 115.

Accumulated in the internal resource DB 111 is management information on the business resource held by the own company. Examples of the business resources include intangible assets such as know-hows and skills which are used at the own company, IP tools which can be used at the own company and other places, personnel, materials, funds, customer information, strategy information, and information on an enterprise project under contemplation and the like. The management information contains financial information that occurs or can occur due to the use of those business resources. The management information is distinguished from the information on the other business resources by a resource ID for identifying a business resource to be managed uniquely within a system. The information stored in the internal resource DB 111 is extracted by an ID search or a keyword search according to a purpose of supporting an operating user, and an information processing using the extracted information is performed, which allows the user to perform a tactical asset analysis of the own company and the like.

The external resource DB 112 is held by an individual or an organization outside the own company (hereinafter, referred to as "other company" for convenience). In the external resource DB 112, information on the business resources which the own company wishes to hold or has an interest in, objective assessment information for each of such business resources, external support information for an enterprise, and various kinds of statistic information are accumulated by being classified by section and by enterprise. Each section or each enterprise is distinguished by an ID used for identification thereof performed uniquely within a system, and by a search based on the ID or a keyword within various kinds of information, corresponding information can be extracted. Information accumulated in the external resource DB 112 is extracted by an ID search or a keyword search according to the purpose of supporting the operating user, and the information processing using the extracted information is performed, thereby allowing not only the tactical asset analysis of the own company itself but also the tactical asset analysis relating to the other company, judgment as to the demand/supply of the business resources with respect to the target enterprise, and the like.

Accumulated in the association supporting DB 113 is serendipity information for supporting associations made by the user. The term "serendipity information" used herein means such information as to be originally sought by the user unknowingly or as to make the user aware of it coincidentally. Note that so-called "knowledge in the light", which is knowledge clearly expressed by a human, has only an exclusive meaning but an ambiguous meaning scope, and is therefore hard to be conveyed to another human with accuracy. In view of the above-mentioned situations, the association supporting DB 113 is provided from such a viewpoint that an unexpected way of matching information allows the terminal device 1 to provide at least information of higher level than the user has desired.

In this embodiment, electronic data of each of, for example, a thesaurus, an antonym dictionary, and a large number of dictionaries registered by the user is held as an example of the serendipity information. Then, a synonym, an antonym, and a registered word, which are associated with a word or a phrase specified by the user are output by being included in common data, which will be descried later, or along with the common data. For example, when the user specifies the word "personal computer", such unexpected information beyond thesaurus information as to contain "amusement", "machinery", "waste materials", "distribution", ... is allowed to be output as the serendipity information. Further, upon generation of feature data of a business resource, which will be descried later, the serendipity information is made to be included as one item of the feature data.

Stored in the option DB 114 is information used selectively by the user as required such as a security information file, a risk factor file, a dummy plan file, a screen layout file, a business resource classification result file, a decision-making tool file, a human resource file, and the risk factor file.

Stored in the security information file is information high in security such as: operation authorization levels for user authentication which are set separately for each section of the own company, for example, each of the administration, planning department, IP department, sales department, research department of the own company; an indirect ID that indirectly represents an attribute of the own company (organization name or individual name, IR information, or the like) ; and an indirect ID of each department of another company which is received from the server device 1. The indirect ID serves to prevent the attribute of the own company from being recognized by the outsider immediately from the ID itself, and is used to allow only a concerned party who have been matched to the demand/supply to transmit minimal information required for transactions.

Stored in the risk factor file as risk factors in the exploitation of the business resources are risks defined on a target enterprise basis, for example, an estimated amount of additional cost required when there exists no IP tool, the number of patents of the other company, the number of patents of the own company, relative ability values of the patents of the other company and the patents of the own company, a royalty rate of out-licensing acceptable to the own company, and a royalty rate of in-licensing acceptable to the own company. The information is taken into consideration when it is judged whether or not the demand/supply of the IP tool exists.

Accumulated in the dummy plan file in association with an enterprise ID are a plurality of dummy plans with respect to the target enterprise, data for simulating each of the dummy plans, statistic data for each of existing enterprises, market trend data involving the enterprise, information on affiliation/association/competition, supply chain information, and the like. The information is also taken into consideration when it is judged whether or not the demand/supply of the business resources exists.

Accumulated in the screen layout file are a plurality of interface screens for causing display on the display of the terminal device 1, layout data for each of the interface screens, and the like. On the interface screen, not only an information display area different according to the operation authorization level, but also a shared area for causing display of information for supporting communications between involved departments and a chain of command are formed, and through the display of the shared area, information standardized across an entire organization is allowed to be shared by the users at all authorization levels.

In the classification result file, related information files that have been classified once are stored for each of the business resources stored in the internal resource DB 111 and the external resource DB 112. A plurality of files, for example, the IP tool file, the financial information file, a cost information file, a marketing information file, the decision-making tool file, and the human resource file are stored in association with one another. The information of each file is appropriately displayed visually through the interface screen displayed on the display, for example, through a classification menu screen.

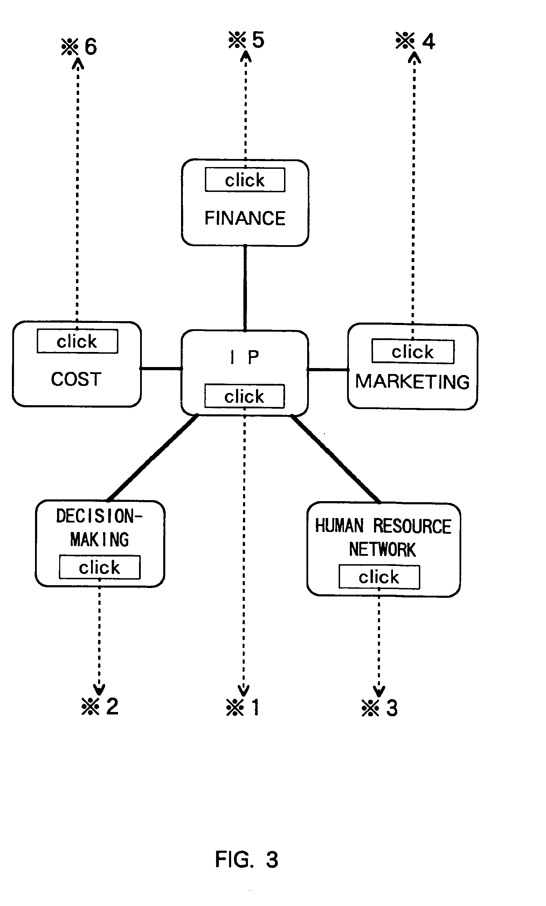

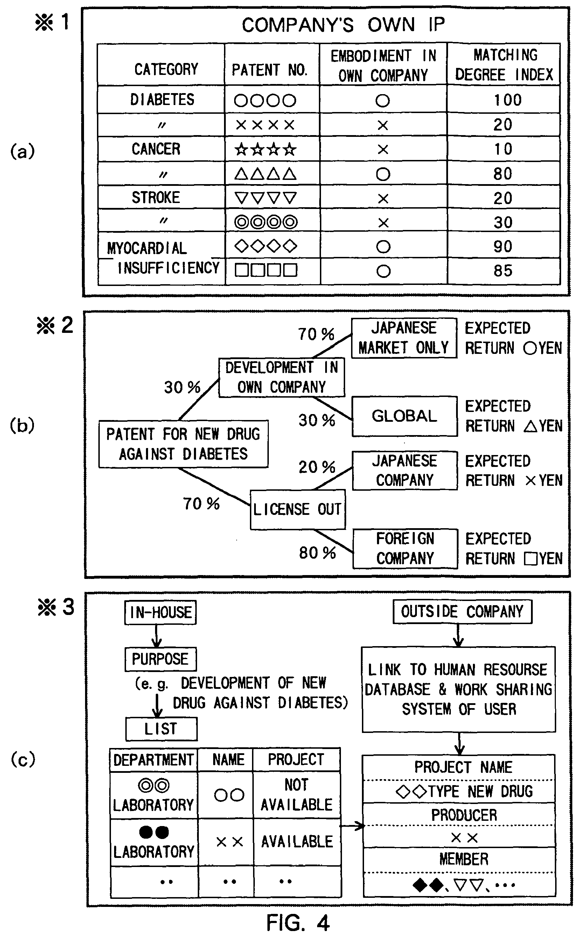

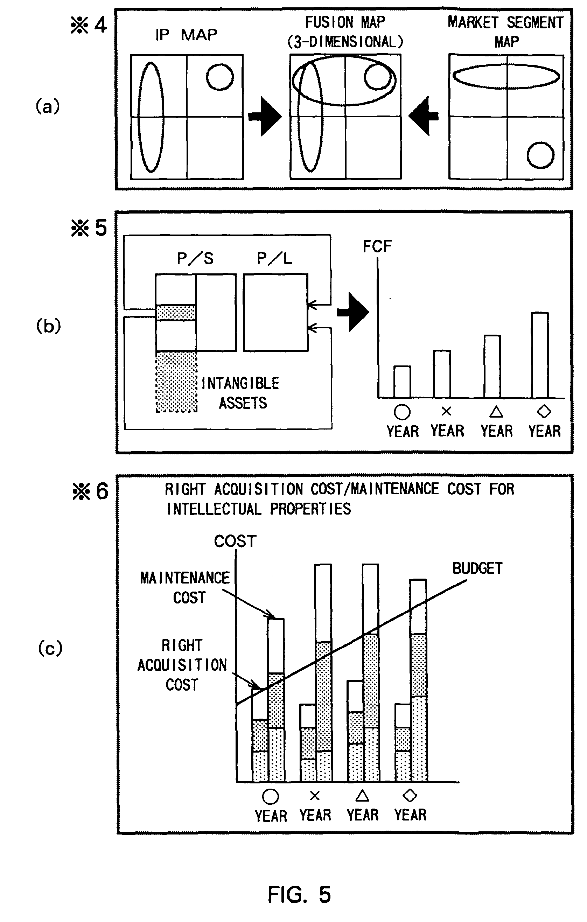

Fig. 3 shows an example of a given classification menu screen displayed on the display serving as one of the output devices under control of the business resource management unit 15, the output control unit 14, and the main control unit 10. In the figure, the item "IP" represents the IP tool file storing the IP tool, the item "financial" represents the financial information file storing the financial information on the enterprise associated with each of the IP tools, the item "cost" represents the cost information file storing the information on the cost involved in maintenance or the like of each of the IP tools, the item "marketing" represents the marketing information file storing marketing information on the enterprise involving the IP tool, the item "decision-making" represents a decision-making supporting file storing a tool for supporting the decision-making when the IP tool is exploited, and the item "human resource" represents human resource information file storing human resource information on the enterprise involving the IP tool. The respective files are associated with the ID of each IP tool within the IP tool file as a key. Figs. 4 (a) to 4 (c) and Figs. 5 (a) to (c) show a display screen example of a file content example that is switched and displayed by the user's clicking on the image "click" on each item on Fig. 3.

Fig. 4 (a) shows a display screen example of a content of the IP tool file. That is, Fig. 4(a) shows a state of storing, for each of patents being a part of the IP tools held by the own company, a category name that indicates a content thereof plainly, a registered number thereof, information that indicates whether or not an enterprise exploiting the patent is implemented at the own company, and a link index. The link index is an assessment value that is quantified based on the comparison between feature information representing features of a single IP tool linked to the enterprise and a predetermined assessment reference data, and is represented by a relative numerical value with a full score being 100, for instance. The link index can be set as one of quantitative data groups described later. That is, if having the value "80", the link index can be set as one of quantitative data by multiplying the numerical value by a weighting coefficient with respect to another business resource revealed by the external resource DB 112.

Referring to Fig. 4(b), stored in the decision-making tool file is data of a decision tree with respect to the enterprise involving any one of the patents shown in Fig. 4 (a) , that is, with respect to implementation of the patented invention. The decision tree is used when, for example, the above-mentioned link index is determined by calculation. That is, the decision tree is used for such weighting that the index is lowered if the implementation is not performed by the own company.

Referring to Fig. 4(c), accumulated in the human resource file are in-house sections and outside-company systems or sections involved in a project related to the IP tool file. That is, information on secured personnel is accumulated. Accordingly, excess/inefficiency or the like of personnel being one of the business resources is visually displayed, which makes it possible to allow the user to judge whether or not the right personnel can be put in the right place.

Referring to Fig. 5 (a) , stored in the marketing information file is data for representing an IP map of IP tools (patents) stored in the IP tool file, a marketing segment map, or a positioning map into which the two maps are fused, for example, in a three-dimensional structure. That is, the business resources of the plurality of competing other companies and the own company are expressed in a numerical form on the three-dimensional coordinate axes from the three viewpoints of a concentration ratio (resources) a technological orientation, and a market orientation. An assessment of the positioning can be made in a plurality of matrices so that the assessment can be made in terms of technological characteristics on the next interface screen having a hierarchical structure, in terms of an assessment reference on the second next interface screen,.... Further, the screen structure is set to be based on a microanalysis (such as SWOT) , an enterprise plan of each company, a market share, and an organization structure. As necessary, macro-environmental information, that is, IP macro-environmental information and economic macro-environmental information, is used. The above-mentioned map data is referenced upon, for example, selection of an enterprise to be a target and judgment of the demand/supply of various kinds of resources with respect to the enterprise. The marketing information allows the user to visually judge possibilities and the like of the enterprise.

Referring to Fig. 5(b), accumulated in the financial information file is financial data for several years with regard to the enterprise associated with the IP tool file. This is referenced when, for example, it is judged whether or not the enterprise is to be continued/canceled and whether or not a new enterprise is to be developed. Accumulated in the cost file of Fig. 5(c) is the cost, for example, right acquisition cost and maintenance cost, for the IP tool associated with the IP tool file. This is referenced, for example, when it is judged whether or not the IP tool is to be supplied.

By performing an information processing using information of each file according to the purpose, the current tactical asset analysis and the like of the own company are performed for each of the business resources, making it easy for the user to select a candidate for the target enterprise and judge the demand/supply of the business resources involved therein.

Stored in the rule file 115 are the plurality of rules for quantifying the features of the business resources of the own company and the other company by strategic assessment/analysis thereof. In this embodiment, a qualitative assessment rule, a quantitative assessment rule, a correspondence rule, and a relevance assessment rule are stored, and by an appropriate combination thereof according to the purpose, it is possible to quantify the features of the business resources from a plurality of viewpoints different from each other.

The qualitative assessment rule is a rule that defines a method and parameters for performing a ranking assessment based on a relative assessment, that is, scoring, for each of the business resources or for each of the enterprises involving the business resources. The quantitative assessment rule is a rule that defines an execution procedure and parameters for an assessment expression for performing a quantitative assessment, that is, value calculation/determination, based on one business resource or a combination of a plurality of business resources. A purpose ID indicating an assessment purpose and reference data to be referenced upon an assessment are associated with each of the qualitative assessment rule and the quantitative assessment rule. In a case of performing an assessment on an enterprise basis or on a business resource basis, the enterprise ID and a business resource ID are also associated therewith.

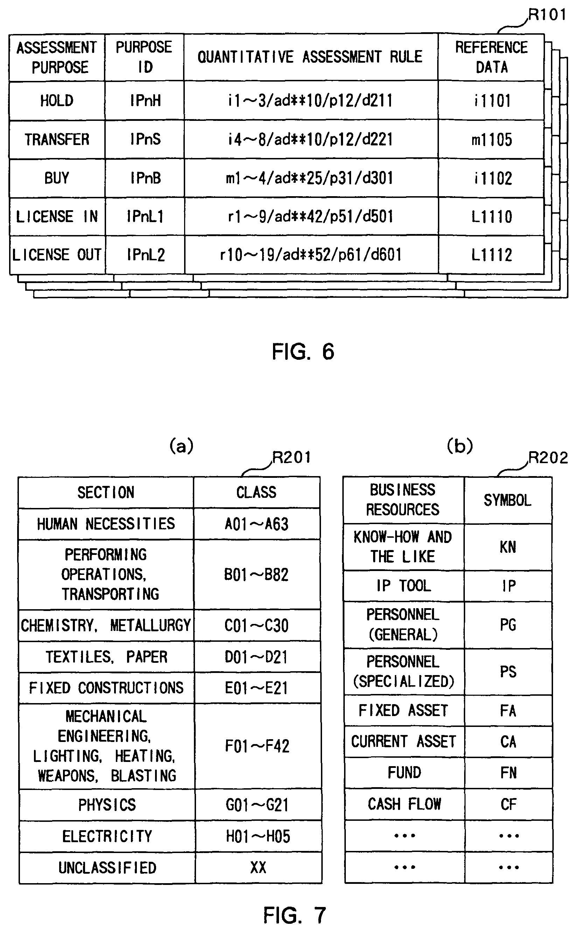

In a case where, for example, the business resource is an IP tool, the quantitative assessment rule has contents shown in Fig. 6. In the example of Fig. 6, set in a purpose ID field of a quantitative assessment rule R101 is data corresponding to the assessment purpose for the IP tool ("IP") distinguished by a suffix (such as "n"). For example, respective purpose IDs are set in such a manner as "IPnH" to 'HOLD" for holding an IP tool identified by "Ipn" at the own company, "IPnS" to "TRANSFER" the IP tool, "IPnB" to "BUY", "IPnL1" to "LICENSE OUT", and "IPnL2" to "LICENSE IN".

Set in the field of the quantitative assessment rule among fields associated with respective purpose IDs are, for example, an approach method for an assessment, ground information used for the assessment, an execution procedure, and a usage rule for coefficient data to be used. Specified as the ground information to be used are, for example, addresses of one or a plurality of kinds of information stored in the above-mentioned business strategy DB 11 (in Fig. 6, "ad**10" to "ad**52"). Specified as the approach method is one of, for example, a market approach in which a market value is referenced (in Fig. 6, "m1" to "m4"), an income approach for determining an income amount by calculation (discount/cash flow: a discount cash flow (DCF) method, an improved method thereof, or another assessment method; in Fig. 6, "i1" to "i8"), and a royalty approach based on a royalty amount (in Fig. 6, the "r1" to "r19") . The execution procedure indicates a sequence upon an actual assessment. Examples thereof include assessments performed on an enterprise, a product, a selling point, and the IP tool in the stated order after the assessment of an enterprise. Some can be selected according to the respective in-house situations (p12 to p61). The coefficient data to be used is prepared in different types according to the assessment purpose (in Fig. 6, d211 to d601).

In correspondence with each quantitative assessment rule, statistic data of similar market prices in the market approach, a section-specific assessment expression and parameters including a risk coefficient in the income approach, and a section-specific state-owned patent royalty rate and coefficients in the royalty approach are stored as reference data in association with the respective purpose IDs. In Fig. 6, "i1101", "ill02", "m1105", "L11110", and "L11112" indicated in the reference data field are addresses of files in each of which the reference data is stored.

For business resources other than IP tools or a combination thereof, in substantially the same manner as the case of Fig. 6, such a quantitative rule is prepared as to have an item defined in consideration of a strategic element in advance.

The correspondence rule is a rule for performing quantification by making a management content correspondent to an assigned segment recognizable within the device, for example, making a section to which the enterprise belongs correspondent to a detailed class thereof or making the type of business resource correspondent to an identification symbol thereof. Fig. 7 is a diagram showing a content example of the correspondence rule. Fig. 7(a) shows correspondences between the sections and the detailed classes. Stored as an example is a rule R201 corresponding to the International Patent Classification table. Fig. 7 (b) shows a rule R301 in which the type of business resource is made correspondent to the respective assigned segments. In addition, the Design Classification, the International Trademark Classification, or the like can be used as one correspondence rule. In those correspondence tables R201 and R301, the details of an item field on the right appear on a dialogue window of the interface screen in detail, and only by making a selection thereof through the input device from the user, data for identifying the item concerned is input. The correspondence rule is also used upon generation of the relevance data and the like. The relevance assessment rule is a rule for expressing a relevance degree between the target enterprise and the business resource to be the target of exploitation. This will be described later.

Returning to Fig. 2, a description will be made of each of the other functional blocks of the terminal device 1.

The communication control unit 12 performs by interactive communications with the server device 2 according to a protocol and a parameter recorded in a memory area and (not shown) , and at the same time, allows direct communications with another device or system connected to the wide-area network WN. The communication control unit 12 also manages a firewall existing before the wide area network WN, preventing the information managed by the own device from being stolen by the external device.

The input control unit 13 receives an input of information from an input device operated by the user, in-house information storage means (not shown), the server device 2 connected to the wide-area network WN, another terminal device 1, the public organization system 3, the data bank 4, the third-party terminal 5, or the expert system 6, and performs control for transmitting the information to the business resource management unit 15. The input control unit 13 performs user authentication at a time of the initial operation by the user. That is, the interface screen for authentication is displayed on the display, and when the authorization information is input by the user according to this, the input authorization information and the authorization information stored in the option DB 114 are collated. If matched, an interface screen on a tier corresponding to the operation authorization level is identified by the option DB 114, and the interface screen is displayed on the display. On the interface screen, a supporting purpose menu is displayed, that is, the items associated with the above-mentioned purpose IDs on a one-to-one basis are displayed as a menu. By the display of the interface screen, the input control unit 13 further translates the content of an instruction input through the input device, and transmits the translation results to each of the functional blocks, including the main control unit 10. For example, when a specific item is selected from the menu on the interface screen displayed on the display, according to a predetermined rule, the content associated with the item is converted into data recognizable to each of the functional blocks (the main control unit 10, the business resource management unit 15, the relevance data management unit 16, and the common data management unit 17 that are shown in Fig. 2). Then, the data after the conversion is transmitted to the functional block corresponding to each. Accordingly, the user's inputs of the type of enterprise, the purpose ID, a correlation condition, and other such data are transmitted to the corresponding functional block correctly.

According to an instruction from the user, the output control unit 14 performs selection of information to be output to the display or the like, editing thereof, mapping of the information, image processing, and other such output control in accordance with the purpose selected by the user, to thereby render a variety of expression forms. The screens shown in Figs. 3 to 5 are obtained as a result of the information selection by the output control unit 14. The output control unit 14 also controls a timing of displaying the information.

The business resource management unit 15 performs a processing related to the support of push/pull creation of the company's own business resources. To be specific, a DB manager 151, an information search/analysis engine 152, and a business simulator 153 having a value assessment function for an enterprise or a business resource are included as auxiliary modules. The business resource management unit 15 manages the information on the business resources held by the own company and the other company, and performs processings for supporting concept creation, enterprise strategy planning, necessity determination of demand/supply, and other such decision-making based on the information on those business resources.

The DB manager 151 selects the information received by the input control unit 13, and accumulates the information in the corresponding DB of the business strategy DB 11, allowing each information to be read appropriately. The information search/analysis engine 152 performs, for example, a search through the business strategy DB 11 and information received from an external information providing site with the input of an arbitrary keyword, and various analyses based on the retrieved information. The analyses are performed on, for example, a strategy of a competing organization, a content of the competing business resource, the current status of transactions of the business resource, and a risk factor.

With the trigger of reception of a simulation purpose and conditions or parameters (various variables) required thereby, which are input through the selection from the menu of the interface screen displayed on the display, the business simulator 153 reads various kinds of information accumulated in the business strategy DB 11, and performs an information processing by combining the read information with the input conditions or parameters, to thereby simulate the change in event concerning business involving an enterprise. To perform the simulation qualitatively, the qualitative assessment rule stored in the rule file 115 is used. To perform the simulation quantitatively, the quantitative assessment rule is used. That is, the qualitative assessment rule/quantitative assessment rule associated with the purpose ID representing the purpose identified from the rule file 115 and the current information on the business resources accumulated in the business strategy DB 11 are read, and the information on the business resources is applied to each of the rules, and hence, for example, it is possible to quantify the prediction of the future risk hedging with regard to the enterprise, the excess/inefficiency of the company's own business resources, and how much economic value the business resource satisfying predetermined conditions produces.

The risk hedging is to delete uncertainties or minimize damage, and its prediction involves processings of, for example, identifying a predicted profit margin of when a business resource held by the own company is transferred or licensed out to the other company and a risk for the enterprise derived from the change of the predicted profit margin, and calculating such a critical point at which a profit due to the transfer or the like to which the identified risk is incorporated always exceeds a profit due to the company's own management and use of the business resource.

The excess/inefficiency of the company's own business resources is equal to so-called demand/supply determination for the company's own business resources. Involved therein is, for example, a processing of outputting, in carrying out the target enterprise, such results that a certain business resource becomes short, that a certain business resource is not always needed, and that a certain business resource is not needed at all. The determination results in, for example, "demand" if the business resource is short, and "supply" if the business resource is not needed.

The business resource satisfying predetermined conditions is, for example, a business resource of a case where the necessary IP tool, funds, and the like are all replenished or a business resource of a case where some necessities are not replenished, and according to the business resource, the assessment of its economic value involves, for example, a processing of outputting such a result that an excess profit or loss of m yen occurs n years later.

The business simulator 153 further calculates a future growth rate based on the past and current financial information on the own company, and based thereon, additionally predicts, as one assessment, a resource (in value terms) thrown for acquiring an IP tool among the business resources at the own company, a fund necessary for maintaining the IP tool, a profit produced by the current IP tool, a range within which the IP tool can be transferred or licensed out, a range of a profit that can be produced by the business resources including the IP tool after the settlement of transactions, or the like.

The business simulator 153 may also be configured to select, from the option DB 114, a dummy plan based on the business resource directly input by the user or specified by the user instead of the one based on the information on the business resource already accumulated in the business strategy DB 11, and simulate the future business development of the selected dummy plan based on the quantitative assessment rule with respect to the enterprise and the business resource having a similarity to the dummy plan. Then, the simulation results may be set as quantitative assessment results by the business resource management unit 14.

Note that as to the business simulator 153, various types are provided as a product edition, which can also be exploited. For example, packet software "MAP business simulation II" released from Kabusiki Kaisha MP Keiei can be used as the business simulator 153.

The relevance data management unit 16 generates the relevance data representing a relevance degree of the business resource with respect to the target enterprise in cooperation with the business resource management unit 15. The relevance data is data having a structure including a plurality of quantitative data groups quantified from a plurality of viewpoints. The relevance data management unit 16 generates the relevance data based on various kinds of information stored in the business strategy DB 11 and result information of the analysis/assessment performed by the business resource management unit 15 and/or according to the relevance assessment rule stored in the rule files 115.

Herein, a detailed description will be made of the relevance assessment rule. The relevance degree between the target enterprise and the business resource has many uncertainties. For example, if the business resource is a patent related to a pharmaceutical product, in general, one patent can cover one product, and hence, if the patent is legally effective and has high marketability, high enterprise potentiality, and superiority in competitiveness, the relevance degree between the patent and the enterprise can be substantially 100%. On the other hand, as to a multipart-type product such as an electronic device and a service related thereto, one product or one service involves an enormous number of patents. In this case, not only enterprising readiness, but also, the number of the other company's patents, the presence/absence of relative superiority with respect to the other company's patent, the presence/absence of technological superiority, and the like greatly affect the implementation of the enterprise. Therefore, the relevance degree between each single patent and the enterprise may be as low as 0 to several %. The same holds true of cases of a relatively sole right such as a copyright, a right of using a mark concerning a product/service such as a trademark right, and an exclusive sole right regarding the form of an article such as a design right. If the business resource is personnel, a specialty, skills, a personality, and the like of the personnel greatly affect the enterprise. If the business resource is a material, its performance and quantity greatly affects the enterprise. If the business resource is a fund, in general, the relevance degree between the fund alone and the enterprise is low, but the relevance with the enterprise becomes strong in liaison with the personnel having skills and motivation, material goods, information, and the IP tool. There are such special situations between the enterprise and the business resources but as an empirical rule, a person who knows best about the relevance degree between the enterprise and the business resources that can be candidates for the demand or supply is generally its supplier or demander (user).

Accordingly, in this embodiment, the relevance assessment rule is set as a procedure of prompting the user who can be the supplier or the demander for an action and generating the relevance data based on data thus obtained, the procedure being defined for each type of business resource or for each section or product.

To be specific, a plurality of input screens for prompting the user for an action such as a data input is prepared in the option DB 114, and a sequence of reading those input screens from the option DB 114 to be displayed on the display, the hierarchical structure, and the weighting coefficient for data generated or input through the display of each input screen are changed for each type of business resource or for each section or product. Then, the relevance data is allowed to be generated by arranging a set of the input quantitative data in a data structure recognized at least by the server device 2.

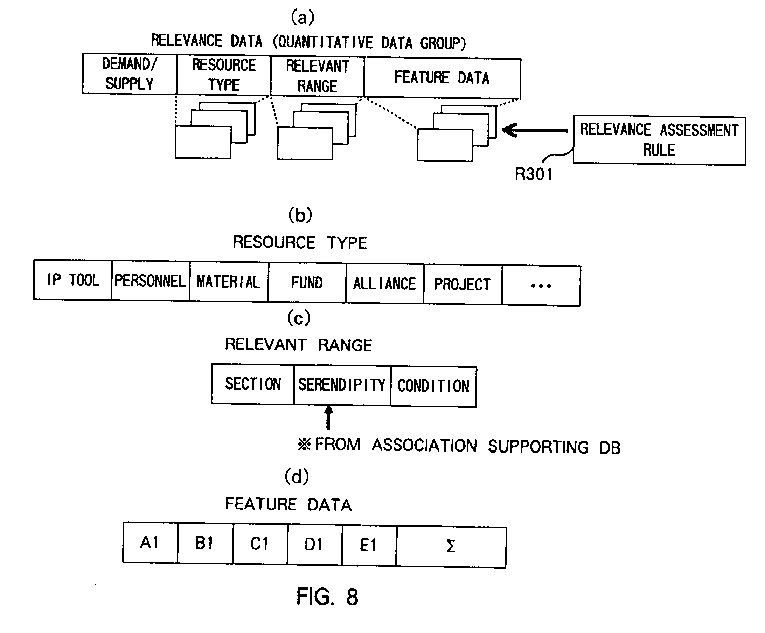

As shown in, for example, Fig. 8 (a) , the relevance data is obtained by arraying in a predetermined order, for each business resource to be exploited in the target enterprise, the type of "demand/supply", a "resource type", a "relevant range" for narrowing down a range in which the business resource is exploited, and the "feature data" obtained by quantifying the features of the business resource based on a plurality of kinds of assessment rules different from each other.

The type of "demand/supply" is a kind of demand/supply ID for expressing the type of demand/supply which is output from the above-mentioned business simulator 153 by the user inputting necessary parameters. Set as the "resource type" by the user are one or some of a plurality of the items of data exemplified in Fig. 8(b). Those items of data are data obtained by quantification by using symbols indicated in the right field of Fig. 4(b). The "relevant range" is data having a structure exemplified in Fig. 8(c). That is, components thereof are respective data items on the "section", "serendipity", and "condition" that are related to the business resource selected by the user. Set as the "section" is the data on the class field of Fig. 4 (a) if the selected business resource is a technology or a patent. Set as the "serendipity" is an associative word (serendipity information) that is automatically extracted, when the data in the class field is set, from the association supporting DB 113 with a word belonging to the class as a keyword. The associative word is set in order to obtain unexpected results which the user is unaware of. Note that the setting of the serendipity information can be turned off. The "condition" is a range of numerical values desired by the user for the match on the server device 2, and has such a content that, for example, in view of the reality that the supply rarely matches the demand completely, the given range is decided, and information matching within the range is desired. It is also optional whether or not the "condition" is set. If the condition is not set, the matching degree is determined by the condition defined by the server device 2.

The feature data is a set of data items exemplified in Fig. 8(d), that is, a set that can be a quantitative data group only by itself. "A1" to "E1" exemplified in Fig. 8(d) are data respectively obtained by quantifying the assessment results for the respective items in terms of numerical values, and " represents a total value thereof. The items "A1" to "E1" are items having mutually different viewpoints, such as, for example, if the business resource is a patent, a contribution degree (A1) with respect to an enterprise or a product of one patent, the enterprising readiness (B1), the marketability (C1), the relative superiority in the respective competitiveness (D1), and a right claiming period (E1), and the respective items "A1" to "E1" are assigned weights so that the total value ( ) falls within a range, for example, from 0 to 100 points. To weight all of "A1" to "E1" evenly, the maximum points of the respective items in the assessment results may be set to 20. By allowing the user to input necessary parameters, the numerical values and weights are output by being automatically calculated by the business simulator 153 of the business resource management unit 15.

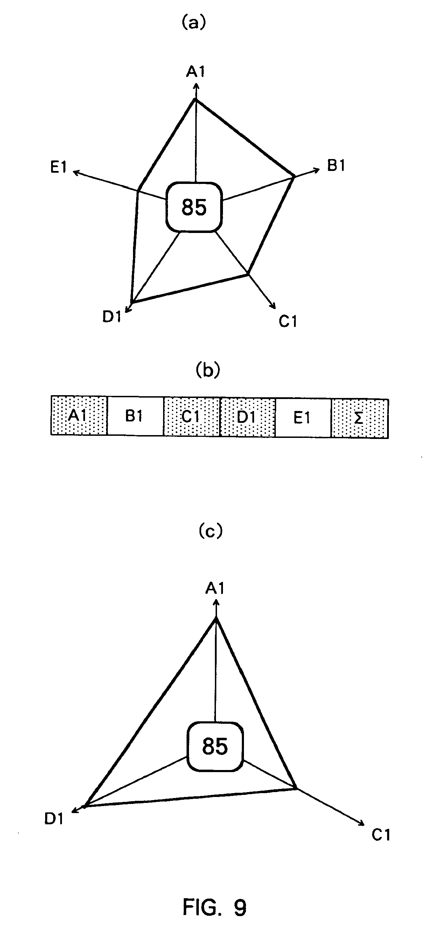

Note that the contents and the number of the items "A1" to "E1" , which are taken just as an example, can be increased or reduced as necessary. In addition, in place of the total value " average value may be provided. For example, Fig. 9(a) expresses the assessment results of all of the items "A1" to "E1" and the total value thereof as a distribution of the feature data, but as shown in Figs. 9 (b) and 9 (c) , only some of the items may be selected, and the average value of the assessment results for the selected items may be used in place of the total value. However, it is desirable to follow a rule shared across the entire network system as to how many items have what kind of contents.

Accordingly, the relevance degree of the business resource to be the target of the demand/supply with respect to the target enterprise is expressed by the relevance data including the quantitative data group, and hence, it is expected that, for example, a comparison between the features of the business resources be finely performed for each pair of the demand and the supply, and that the matching degree of the demand/supply be determined precisely. Further, since the relevance data is generated by including the serendipity information, there is also a possibility that the user may obtain such results as to surpass the user's expectation. Note that the expression forms as shown in Figs. 9 (a) and 9(c) can be realized by a drawing processing by the output control unit 14.

The relevance data may be generated as a plurality of items in a single enterprise. Further, there may exist not only the "demand" for the business resource, but also the "supply" of the business resource concurrently. For example, at the own company, their existence may be so compound as to include the demand for a patent, the supply of a patent, the demand for the technician, and an alliance partner (corporate affiliation).

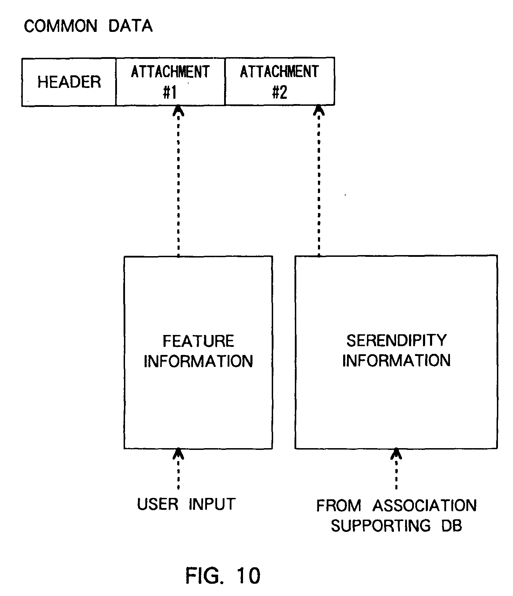

The common data management unit 17 generates the common data that expresses the feature information representing the features of business resources in a data format recognizable commonly across the network system, and holds the common data in, for example, a predetermined area (common data recording area) of the business strategy DB 11. The common data has a structure shown in, for example, Fig. 10. That is, the common data is structured by including a header and a plurality of attachment areas (in the example of Fig. 10, attachments #1 and #2). Set in the header is information indicating which relevance data the common data corresponds to. Attached to the attachment #1 is a data file in which the feature information representing the features of a business resource input by the user is described in a data format, such as text data, recognizable to another terminal device 1 and the server device 2. Input in the attachment #2 is the serendipity information extracted from the association supporting DB 113 with a word contained in the feature information as a keyword. Accordingly, unexpected information more than intended by the user can be presented to another user. Note that the data structure as shown in Fig. 10 is not necessarily employed.

The feature information to be the source of the common data is obtained by, for example, displaying a predefined screen of a common data input format on the display and arraying in a predetermined order the data items that are input by the user. The examples of the feature information include, if, for example, the business resource is a patent, the section of a technology related thereto, business application data representing what kind of business is related thereto, data that clearly expresses a scope within which the patent is effective, and review information on the IP tool provided by the organization holding the patent. The business application data is, for example, data including the type of enterprise that can be carried out, a market size, the type of product that can be thrown into each market, and the contribution ratio of the IP tool with respect to those products and the like.

Even in a case of another business resource, the common data is generated and held in the same procedure as described above.

The common data management unit 17 is further configured to read, when the communication with the server device 2 is established, the common data corresponding to the business resource to be the target of the demand or supply with the indirect ID as a key and transmit the common data to the server device 2.

When the relevance data and the common data are both ready, the main control unit 10 enables transmitting the relevance data and the common data to the server device 2 through the communication control unit 12 along with the user's indirect ID. The relevance data becomes the demander's relevance data for the business resource being demanded and the supplier's relevance data for the business resource to be supplied.

### [Server device]

Next, a description will be made of the server device 2. The server device 2 is an information processing device which includes as main components a server-purpose program and a computer equipped with a server function, and which is provided with an external storage device. The server-purpose program is distributed by being recorded on a portable recording medium such as a disk in a computer-readable manner, or by being made downloadable from a program server or the like through the wide-area network WN. In this embodiment, the server-purpose program is used to build a demand/supply DB 21 in the external storage device, and form, within the computer equipped with a server function, functions of a main control unit 20, an access control unit 22, a demand/supply management unit 23, and a strategy supporting information management unit 24.

The demand/supply DB 21 is a set of DBs for accumulating information on the demand/supply of the business resource. To be specific, the demand/supply DB 21 includes a demander DB 211 for accumulating the demander's relevance data transmitted from the terminal device 1 in association with the indirect ID of the demander, a supplier DB 212 for accumulating the supplier's relevance data transmitted from the terminal device 1 in association with the indirect ID of the supplier, an introduction DB 213 for accumulating introduction information on the business resource to be the target, an association supporting DB 214, an option DB 215 for storing various kinds of information provided as an optional service to the business resource to be exploited, and a rule book 216. Information accumulated in the demander DB 211 and the supplier DB 212 is classified in accordance with each of the types of business resources.

The association supporting DB 214 has the same structure as the association supporting DB 113 included in the terminal device 1, but is somewhat different in the way of using information. The association supporting DB 113 of the terminal device 1 is used to derive the serendipity information to be a part of the relevance data or the common data, but the association supporting DB 214 of the server device 2 derives the serendipity information used for the matching degree determination of demand/supply.

Examples of information on the optional service accumulated in the option DB 215 include information on a service for introducing specialized personnel related to the transaction/contract involving the business resource, a service for providing detailed information on the enterprise, and an intermediary service for a contract. Those are each provided as one of the items on the interface screen of the display of the accessing terminal device 1, and when the item is selected by the user, the optional service corresponding to the item is started and executed. Stored in the rule book 216 are various kinds of rules including a demand/supply matching degree determination rule and a serendipity conversion rule.

Examples of the introduction information accumulated in the introduction DB 213 include the common data transmitted from the terminal device 1 along with the respective relevance data, relative assessment result data between the business resource identified by the relevance data and another business resource held by another party, assessment information that represents a third-party's objective assessment content with regard to the business resource, and the external support information with respect to the business resource or the target enterprise.

The common data is associated with the relevance data and the indirect ID transmitted along therewith. The relative assessment result data is data (such as statistic data and patent map data) that represents relative positioning of a part with respect to an entirety. The assessment information is assessment information received from the third-party operation terminal 5 in terms of, if, for example, the business resource is the IP tool, any one of a legal assessment, a technological assessment, and an economic assessment. The assessment information is associated with the supplier's common data, and when the common data is read, the assessment information can be provided as well. This can provide objective judgment materials to an organization that buys or licenses in the IP tool. The external support information includes an IP analyst report, a recent transaction example, the competitor's enterprising ability data, and the like, which are obtained through the third-party operation terminal 5, and is also associated with the supplier's common data, and when the common data is provided to the terminal device 1, the external support information can be provided in place of the assessment information or along with the assessment information. Accordingly, it is expected that it be easy for the user operating the terminal device 1 to select the target enterprise for which the business resource is to be exploited.

The main control unit 20 performs various kinds of necessary control for operating as the server device 2. As necessary, the main control unit 20 further performs control for acquiring information from the system or various kinds of device connected to the wide-area network WN, an instruction to provide information to the terminal device 1, and the like.

The access control unit 22 allows secured communication with all of the devices connected to the wide-area network WN or the system. The secured communication can be realized by such encrypted communication as to, in a much simplified manner, authenticate whether or not access is accompanied by predetermined authorization information and permit communication only with the authenticated access. However, the secured communication, of course, may naturally be realized by another security tool.

The demand/supply management unit 23 includes, as auxiliary tools, a DB manager 231 and a random number generation device 232. The DB manager 231 performs accumulation of various kinds of information into the demand/supply DB 21 (file structuring) and reading thereof. The random number generation device 232 is used for, for example, generating a random number for expressing contingency upon matching degree determination of demand/supply. The demand/supply management unit 23 starts those auxiliary tools as appropriate, and uses various kinds of rules that are stored in the rule book 216 to perform a matching degree determination of demand/supply of the business resource and a processing for providing information to the demander or the supplier in cooperation with the main control unit 20.

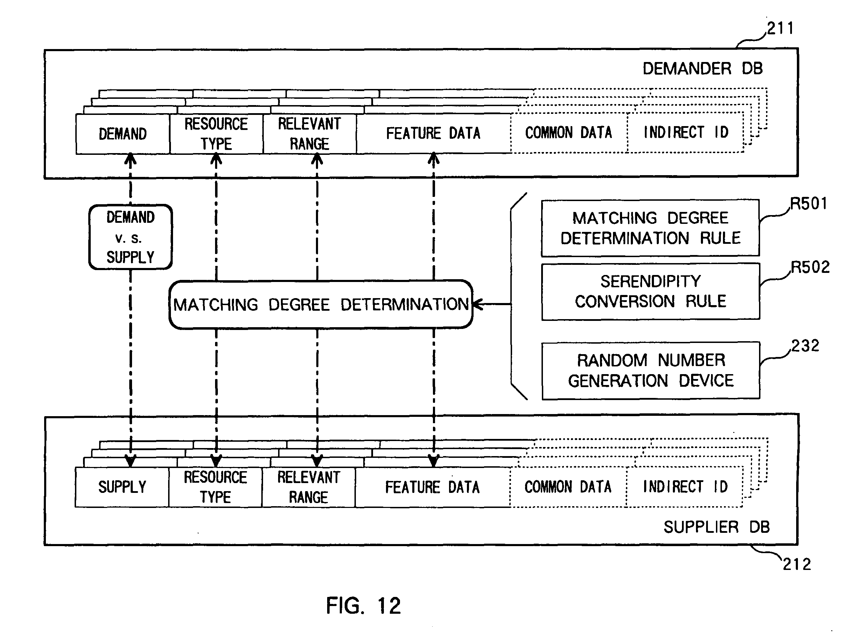

Fig. 12 is a diagram showing a concept of the matching degree determination of demand/supply. The matching degree determination performs a comparison between the features of the quantitative data groups respectively contained in all the demander's relevance data accumulated in the demander DB 211 and all the supplier's relevance data accumulated in the supplier DB 212 for each pair of the demander (demand) and the supplier (supply) identified by the data (demand/supply ID) indicating the type of demand/supply. Used for the matching degree determination are a matching degree determination rule R501 and a serendipity conversion rule R502. As necessary, the random number generated by the random number generation device 232 is used as a parameter for the matching degree determination, for example, a numerical value representing a range for determining the matching.

The matching degree determination rule R501 is a rule defining in which range the matching degree is determined to exist. For example, the matching degree determination rule R501 may be such a simply-described rule as to determine "matching degree exists" if the type of business resource (Fig. 8(b)) and the "section" in the relevant range (see Fig. 8 (c)) each have the same value and if a difference between the features indicated by the quantitative data groups (Fig. 8(d)) matches the condition predefined within the system, but a determination as to whether or not a condition satisfying the "condition" specified by the user and included in the relevant range (Fig. 8 (c)) is matched satisfies the user's need for searching for what the user wishes to find. For example, if the user specifies such a condition that the matching is performed on the relevant range including not only the "section" but also the "serendipity" and that the matching degree between " " s of the feature data is equal to or larger than 20%, the matching degree between "A1"s of the feature data is equal to or smaller than 20%, the matching degree between "b1" of the feature data is equal to or smaller than 30%,..., it is preferable to set the rule to determine the result satisfying the condition as "matching degree exists".

The serendipity conversion rule R502 is defined as a rule for causing the server device 2 to include the serendipity information in the parameters (variables defining the type of information to be used) for the matching degree determination if, for example, the user does not specify the "serendipity" for the relevant range. For example, the serendipity conversion rule R502 extracts, from the association supporting DB 214, with a word contained in the "section" data as a keyword, information derived from or associated with the keyword, and adds the information to the above-mentioned "serendipity" to perform the matching degree determination.

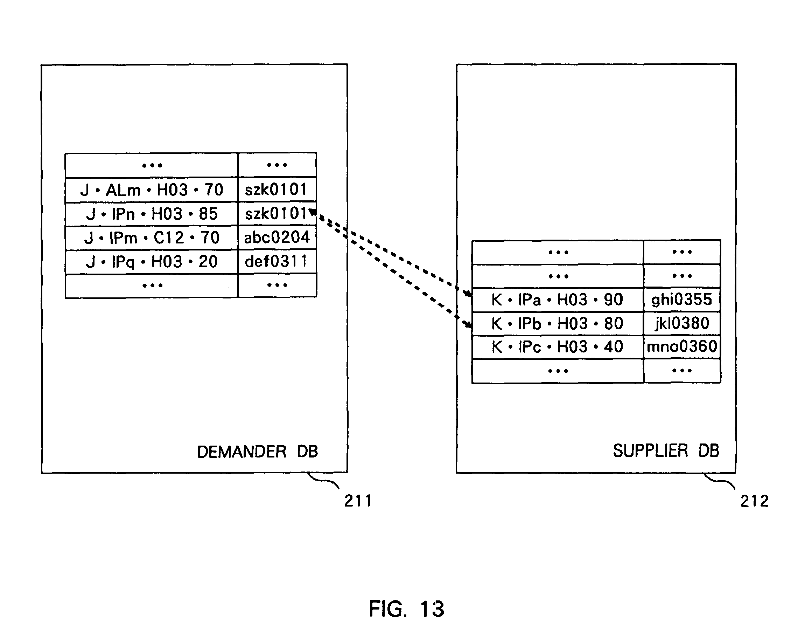

Fig. 13 shows an example of the matching degree determination of demand/supply using the above-mentioned matching degree determination rule R501 and the like. In the example of Fig. 13, in the demander DB 211, a plurality of relevance data items with a head field thereof set to "J" being the demand/supply ID, the subsequent field set to "ALm", "IPn", "IPm" , "IPq",... being data representing the demanded resource type, the subsequent field set to "H03", "C12",... being data representing the section, and the subsequent field set to the numerical values "20", "70", and "85" each representing the total value of a plurality of items of data as the feature data, are stored in association with "szk0101", "abc0204", "def0311" being the indirect IDs of the demanders. On the other hand, in the supplier DB 212, a plurality of relevance data items with a head field thereof set to "K" being a supply ID, the subsequent field set to "IPa", "IPb", "IPc",... being data representing the demanded resource type, the subsequent field set to "H03",... being data representing the section, and the subsequent field set to the numerical values "40", "80", and "90" each representing the total value of a plurality of items of data as the feature data, are stored in association with "ghiO355", "jk10380", "mno0360" being the indirect IDs of the suppliers. The data representing the resource type is exemplified in Fig. 7 (b), and the data representing the section is exemplified in Fig. 7 (a) In the example shown in the figure, the "condition" or "serendipity" is not added, and the data set by the server device 2 is used. Assuming that the server device 2 uses such a matching degree determination rule for determining the two relevance data items with the same "section" and the "feature data" within a range from 10 to 30% as "matching exists", the server device 2 determines that the relevance data "J-IPn•H03•85...szk0101" of the demander DB 211 matches each of two relevance data items "K•IPa•H03•90...ghi0355" and "K•IPb•H03•80...jk10380" of the supplier DB 212. Then, the terminal device 1 of the demander can be provided with the two supplier's common data items. At this time, when the assessment information, the external support information, and the like of the resources are recorded in association, those can be provided as well. On the other hand, the terminal devices 1 of the two suppliers can be provided with the same demander's common data. In this case, the existence of the two terminal devices 1 to be the suppliers are concealed from each of the terminal devices 1 to be the two suppliers. This can be realized by, for example, identifying the demand/supply ID existing in the head field of the relevance data, and filtering the relevance data so that the demander and the supplier is recognized in only one direction of the two-way. The processing is as if there exists a "one-way mirror".

The strategy supporting information management unit 24 performs a processing related to the support of push/pull creation of the business resource for each organization or individual. To be specific, the strategy supporting information management unit 24 displays the information stored in the introduction DB 213 and the option DB 215 on the display of each of the accessing terminal devices 1, provides the introduction information desired by the user of each of the terminal devices 1, and performs the service for introducing specialized personnel related to the transaction/contract involving the business resource, the service for providing detailed information on the enterprise, and the intermediary service for a contract.

### [Operational example]

Next, a description will be made of an operational example of the network system having the above-mentioned structure. As a precondition, user authentication has been finished on the terminal devices 1 by the access control unit 13, and authentication with respect to each of the terminal devices 1 has also been finished on the server device 2.
(1-1) Concept creation support
   The terminal devices 1 each have the function of performing a concept creation support. When judging the demand/supply of the business resource, the user can select this function. If the function for the concept creation support is selected, the business resource management unit 15 of the terminal device 1 starts the search/analysis engine 151, and performs a processing for selecting concept-level information from among the various information accumulated in the business strategy DB 11. That is, the processing of shaping the user's vague ideas is performed. The processing is started by the user inputting a plurality of words or phrases randomly. Upon reception of many words or phrases input by the user, the search/analysis engine 151 searches the business strategy DB 11 to extract many short phrases included in the already-accumulated information. At this time, keywords related to the input words or phrases are extracted from the association supporting DB 113 , and short phrases containing those keywords are generated and output. For example, if the input words or phrases are "new enterprise, development of new markets, for children, niche, health, minimum investment, area-limited", the search/analysis engine 151 outputs such phrases sequentially without pause as "a marshmallow for enriching a chewing power", "a pedometer", "playing soccer at XX" , "and an aroma dispenser of a small pendant type ... " , and the like. Those phrases are displayed one after another on the display of the terminal device 1. The user enlarges the concept by viewing those phrases. By narrowing down related market information or the like for details with the input of a new word or phrase, it turns out that the aroma dispenser can be designed by using a character for tutoring children, can use the button battery at low power for one year by applying a micro-oscillation technology, or is highly safe. The user enriches the concept, expecting that it be relatively easy to secure the position as the leader in the niche market by incorporating an aroma component covered as having an effect that has recently been proved to control a new type influenza in the aroma dispenser.
(1-2) Generation of relevance data and common data
   As a result of the above-mentioned concept creation support, the user sets production/sales of the aroma dispenser as the target enterprise, and causes the business simulator 152 to predict the business resources necessary for the target enterprise and the future business development. According to this prediction, it turns out that the business development is to be smooth, but technologies about microwave oscillation and patents related thereto become indispensable to manufacture the aroma dispenser. It turns out simultaneously that the micro-oscillation technology is a technology that is not available at the own company, no patent concerning the technology is held, and the personnel is not always sufficient. Therefore, the user causes the terminal device 1 to generate the common data and the relevance data indicating that the demand for the business resource exists with respect to the target enterprise. The relevance data includes: identification data representing the demand; relevant range data including the type of resource being demanded, a section of the aroma dispenser, serendipity information, and a condition; and feature data. As the condition, with regard to the patent, such data is adopted from among the feature data as to match the quantitative data group representing the numerical value derived from the business simulator 152 and such a weighting coefficient as to place an importance on the legal stability of the demanded patent within a range the common data is generated based on the feature information such as "aroma dispenser, fragrance, cloudy mist, and microwave oscillation, influenza control...".
   The terminal device 1 transmits those items of the relevance data and the common data along with the own indirect ID to the server device 2.
(1-3) Matching degree determination of demand/supply
   In such a manner as exemplified in Fig. 13, the server device 2 (demand/supply management unit 23) identifies a pair of demand/supply within such a range as to match the above-mentioned condition data from among the relevance data that has been received from each of the terminal devices 1 and is stored in the demander DB 211 and the supplier DB 212. Then, the supplier's common data matching the condition data and the indirect ID are distributed to the terminal device 1 of the user concerning the demander. When the assessment information or the external support information is linked to the common data, those items of information are also distributed.
(1-4) Transaction judgment support for business resource
   The user references the common data and other information distributed to the terminal device 1 to judge whether or not the business resource of the supplier is attractive to the own company. If it is judged that the business resource is useful to the own company, a request is made to the server device 2 for a direct negotiation or a negotiation through the intermediation of a specialist. For the direct negotiation, the server device 2 notifies the supplier that has sent the indirect ID to that effect, and performs a support for an exchange of personal information between the concerned parties. When the negotiation through the intermediation of a specialist is requested, the server device 2 performs dispatch of the specialist and the like. Note that a user A can also issue a request for a support of a consultant for the negotiation from the terminal device 1 to the server device 2.
   Accordingly, it becomes possible to perform the negotiation based on the tactical asset of the own company.

### [Modified example of first embodiment]

The first embodiment has been described as an example of allowing the supplier's common data, the assessment information, and indirect ID (supplier information) to be provided from the server device 2 to the terminal device 1 concerning the demander, and on the other hand, allowing the demander's common data and the indirect ID (demander information) to be provided to the terminal device 1 concerning the supplier. Such a mode is also possible as to allow the relevance data of the matching obj ect to be provided as well. That is, the supplier information including the supplier's relevance data in addition to the supplier's common data may be allowed to be provided from the server device 2 to the terminal device 1 concerning the demander, and on the other hand, the demander information including the demander's relevance data in addition to the demander's common data may be allowed to be provided to the terminal device 1 concerning the supplier. By receiving the relevance data of the matching object, the terminal device 1 can analyze further in detail the detailed matching degree between the received relevance data and the relevance data of the own company.

Therefore, according to the network system of this embodiment, the supplier information on the business resources high in possibility of matching the demand is provided from the server device 2 to the terminal device 1 of the user, and hence, it becomes easy to acquire information on where and how many business resources that are needed at the own company exist, which realizes a pull creation support for the user. On the other hand, the terminal device 1 of the user who wishes to supply the business resource is provided with the demander information on the business resource high in possibility of matching the supply, and hence, it becomes possible to acquire information on where and how many demands for business resources that can be supplied by the own company exist, which realizes a push creation support for the user. Accordingly, it becomes possible to put the right business resource in the right place owing to the matching between the enterprise strategy and the business resource. There is an effect that, even if the two parties are reluctant to access each other without the network system, the access is enabled through this system.

### <Second embodiment>

Next, a description will be made of a second embodiment of the present invention. In this embodiment, a search function using the server device 2 described in the first embodiment, in particular, the association supporting DB 214, is reinforced. Even if information on the resource to be exploited is distributed from the server device 2 to the terminal device 1 of the user, the user generally performs another information search in order to verify the certainty of the information on the resource. In this case, a conventional search engine, for example, the prominent service "Google" provided by the US company, Google, Inc. is configured so that a page that is linked in from a large number of pages is ranked high by being judged as "a page having useful information", and a page that is linked in from a high-ranked page is also ranked so as to be valued highly, with the result that "popular pages that are most likely to be referenced" are made to be displayed in high-ranked positions. Recently, there is a service for providing keywords similar to a given search keyword. However, the information obtained through such search engines results in homogenization. This is because linking pages and linked pages have homogenized contents. It is hard to describe that the conventional search method is always sufficient to couple small groups of information or knowledge that are segmented and scattered like island universes. It is thought to be a DB and a search engine provided with contingency and unexpectedness allowing an accidental meeting with heterogeneous information, that widely draw inspiration in the above-mentioned concept creation and create a new wisdom from findings of mutual relevance between scattered information and knowledge. To achieve a purpose such as the creation of a new enterprise/new product based on novel concept creation, there is a limit with the conventional type of search method represented by Google. A method for overcoming the limit is a search method to be described in this embodiment.

The server device 2 of this embodiment is configured to, for example, receive information on the demand/supply of the business resource, and based thereon, provide a user who desires a further information search with an opportunity to come across heterogeneous information along with contingency and unexpectedness/associativeness. In this embodiment, the terminology "keyword" is used, but if there is a particular need to distinguish different keywords, the keywords will be referred to as: a "normal keyword" for a keyword normally used by the user; a "subject keyword" for a keyword to be a target of a processing among the normal keywords; an "association keyword" for a keyword that can be associated with the subject keyword among the normal keywords; a "search keyword" for a keyword that is actually used for a search; and a "search keyword candidate" for a keyword that is queried from the server device 2 by the user.

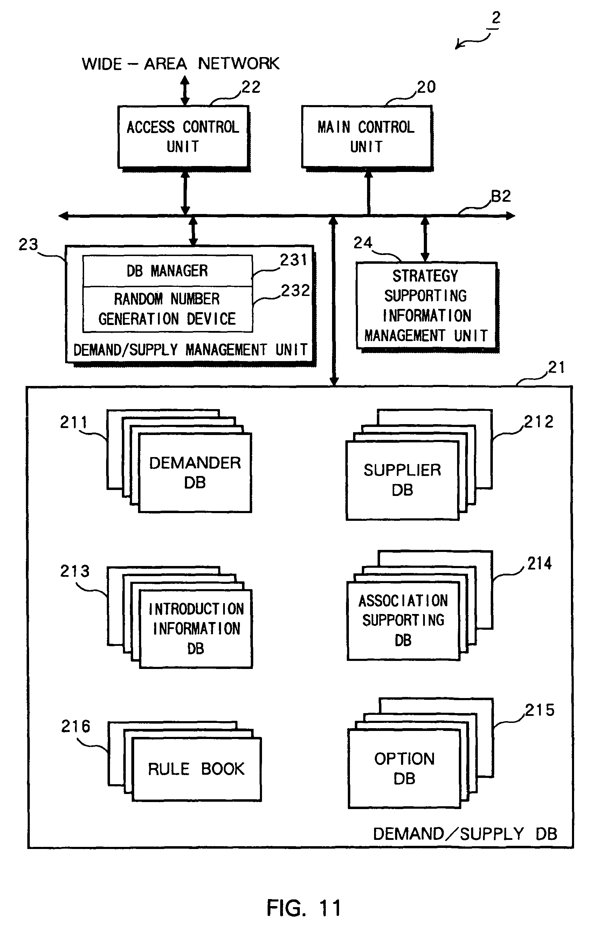

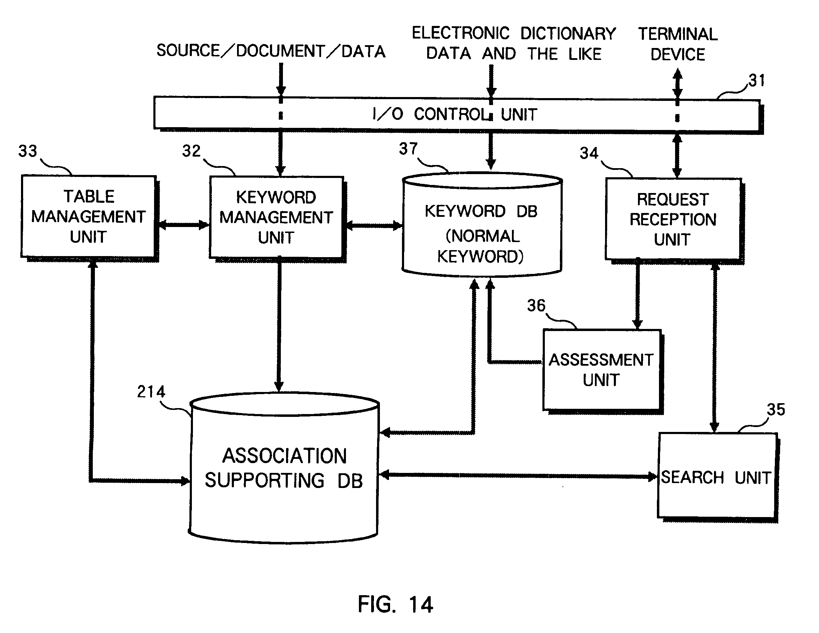

The server device 2 according to this embodiment is configured to further include functions and a DB exemplified in Fig. 14 in addition to the components according to the first embodiment shown in Fig. 11.

That is, the formed functions are an I/O control unit 31 for performing input/output control with respect to an external device, a keyword management unit 32 for managing recording/reading and the like of the above-mentioned various kinds of keyword, a table management unit 33 for generating or updating a relevance table, a request reception unit 34 for receiving a request from the user, a search unit 35 being a novel search engine, and an assessment unit 36 for assessing search results, and a keyword DB 37 is built in the storage device.

Examples of the external device connected to the I/O control unit 31 include an acquisition source for source document data for extracting a keyword that can be the subject keyword or the association keyword, an accumulation source for electronic dictionary data to be the source of the normal keyword, and the terminal device 1 for performing an information request.

In the keyword DB 37, a plurality of the normal keywords which are the electronic dictionary data or data specified by the user are stored along with IDs for identifying the respective normal keywords. The normal keywords are sorted in the order of the Japanese syllabary. The IDs are index numbers associated with the sorted normal keywords on a one-to-one basis. The keywords referred to in this embodiment are all identified by the index numbers uniquely.

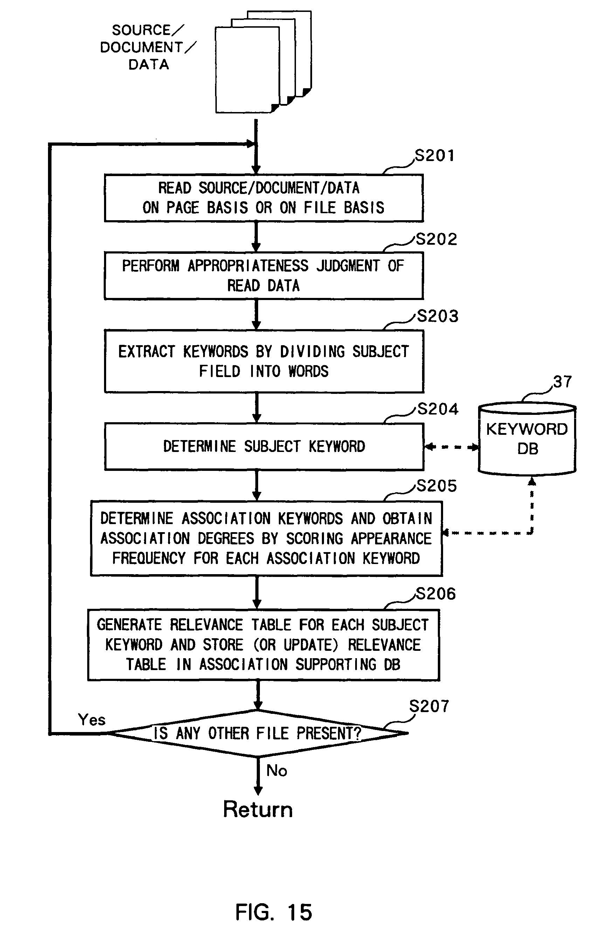

The server device 2 first extracts a subject keyword and an association keyword from the source document data, and derives the relevance between the two keywords. Fig. 15 is an explanatory diagram of an operational procedure for the server device 2 at this time. Referring to Fig. 15, in the keyword management unit 32, the source document data is read on a page or a file basis (the file basis is used in a case of data having no concept of the page) (Step S201). At this time, an appropriateness judgment, which is not an essential processing, is performed on data within a page or within a file (Step S202). The appropriateness judgment is a processing of checking whether or not the data avoids such data as to be aimed for statistic data on purpose. For example, if there exist a plurality of identical keywords in a single sentence successively, the data is judged as inappropriate, which cancels reading from the page or the file.

If the data is judged as appropriate as a result of the appropriateness judgment, the keyword management unit 32 identifies a subject field of the read file by a known field cut-out processing used for character recognition and the like. The subject field is a field of a header portion on top of the file, for example, a field appended with a heading such as "Preface" or "Prologue", which is different depending on the type of source document data. In a case where there exists no such heading, a partial block from the head, containing several hundreds of words, may be set as the subj ect field. In general, a conclusion generally comes first in the writing varying from business documents to essays and Web pages. Important keywords are likely to appear in the subject field. Therefore, in order to identify such important keywords, a predetermined number of characters are extracted from the subject field, and keywords are extracted by word-basis division with a conjunction, a space, a voiced sound mark, a symbol, an English word, and the like used as boundaries (Step S203).

Subsequently, the numbers of extracted keywords are counted, and a keyword highest in appearance frequency is identified. Then, the keyword DB 37 is referenced, and when the matching normal keyword exists in the keyword DB 37, the normal keyword is determined as a subject keyword (Step S204). If the matching normal keyword does not exist in the keyword DB 37, a normal keyword that matches a keyword next highest in appearance frequency is sought, and if found, the keyword is determined as a subject keyword.

After that, by performing the word-basis division again from the head to the end of the page or the file, keywords other than the subject keyword are extracted, and at the same time, it is checked whether or not there exist normal keywords which are the same as the extracted keywords in the keyword DB 37. If there exist, the respective keywords are determined as association keywords, and are each assigned an index number. Then, the appearance frequency is scored for each association keyword. In this embodiment, the scoring result is set as an association degree of each association keyword with respect to the subject keyword (Step S205). The association degree is a numerical value obtained by dividing the number of each association keyword that has appeared by the total number of keywords existing in the page or the file in which the subject keyword exists and multiplying the resultant by 100, and expressed in percentage terms. The numerical data converted into points according to a predetermined rule may also be used as the association degree. The word-basis division here is performed at as minute levels as possible in order to make it possible to minutely check the association degree with respect to the subject keyword. For example, if there exists the phrase "book about intellectual property" within the page, it is preferable to dividing the phrase into four words, that is, "intellectual", "property", "about", and "book". The association degree (appearance frequency) of the keyword "book" in this sentence is 1/4×100 = 25% . After that, the appropriate range of the association degrees is determined by the following rule.
undersized value<appropriate association (1 to 10%)<oversized value

The oversized value means excessive appearance across the entire page or file. This is eliminated because the association degree results in a bias. The undersized value is rarely used, and therefore, is eliminated for the same reason.

When the association degrees of a plurality of association keywords within the page or file containing the subject keyword are thus derived, the keyword management unit 32 causes the table management unit 33 to perform the management of the relevance table. The table management unit 33 extracts the subject keyword and its index number from the keyword DB 37, and associates each of the index numbers of the association keywords and the association degree (%) derived for each of the association keywords with the subject keyword, to thereby generate the relevance table representing the relevance between the subject keyword and each of the association keywords (Step S206).

The above-mentioned processing is repeated for another page or file (Step S207: Yes). This allows the relevance table to be generated for each subject keyword and stored in the association supporting DB 214.

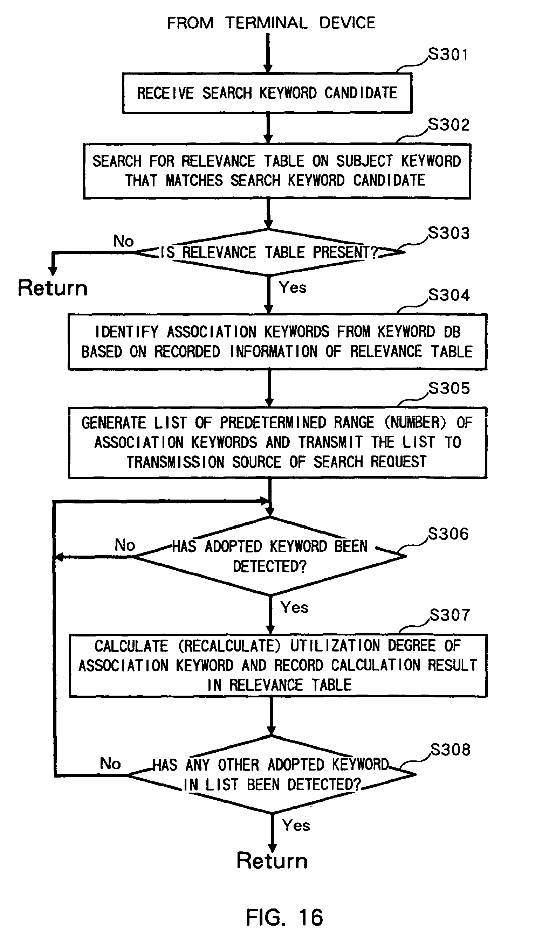

Next, a description will be made of a procedure for an information search using the relevance table. Fig. 16 is an explanatory diagram of an operational procedure for the server device 2 at this time.

The user operates the terminal device 1 to transmit a search request accompanied by a search keyword candidate to the server device 2 in order to search for information on the resource exploitation support. When the server device 2 receives the request through the request reception unit 34 (Step S301), the search unit 35 searches to find whether or not a relevance table on the subject keyword that matches the search keyword candidate exists in the association supporting DB 214 (Step S302). If the relevance table does not exist, the subsequent search processing is canceled (Step S303: No). If there exists, based on some of the index numbers recorded in the relevance table, the association keywords corresponding to the respective index numbers are identified from the keyword field of the keyword DB 37 (Step S303: Yes and Step S304). Then, a list of those association keywords is generated, a list ID is given to the list, and a list ID and the index numbers of the listed association keywords are recorded in a temporary file (not shown). The listed association keywords each become a potential search keyword that can be adopted as a search keyword. After finishing the recording in the temporary file, the search unit 35 provides the terminal device 1 that has issued the search request with the list of the respective association keywords along with the list ID (Step S305).

When any one of the association keywords is adopted as a search keyword on the terminal device 1 that has received the list, the list ID and the index number of the association keyword adopted within the list are returned to the server device 2. Accordingly, the assessment unit 36 references the temporary file to thereby detect which association keyword has been adopted as a search keyword on the terminal device 1 , and transmits the result to the table management unit 33. The table management unit 33 calculates the number of times of the detection performed by the assessment unit 36, and records the calculation result cumulatively in the relevance table in association with the index number of the association keyword (Step S306: Yes and Step S307). The detection count is used as information representing a utilization degree of the association keyword. Each time a recorded content of the relevance table is updated, the table management unit 33 performs sorting thereof. The relevance table is subjected to the sorting in such a manner that the index number of the association keyword having the higher association degree with respect to the subject keyword in the head field is placed in the forwarder field. The utilization degree is recorded as accompanying information.

If it is detected that another association keyword within the list has been adopted, the processing of Step S306 and the subsequent processings are repeated (Step S308: No).

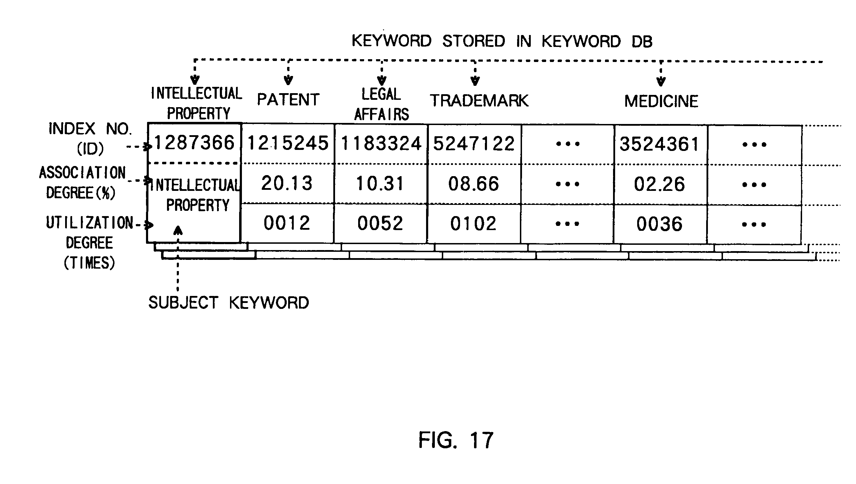

Fig. 17 shows an example of the relevance table thus updated. In the example of Fig. 17, "intellectual property" is determined as a subject keyword. The "intellectual property" and the index number in the keyword DB 37 (ID of "intellectual property": "1287366") are stored in the head field, and the followings are stored in the order from the higher association degree, that is, the index number "1215245 " of "patent" and its association degree "20.13" and its utilization degree "0012", the index number "1183324 " of "legal affairs" and its association degree "10.31" and its utilization degree "0052", the index number "5247122" of "trademark" and its association degree "08.66" and its utilization degree "0102"....

Incidentally, the identification of some of the association keywords in above-mentioned processing of Step S304 and the creation of the list in the above-mentioned processing of Step S305 are performed, for example, as follows.

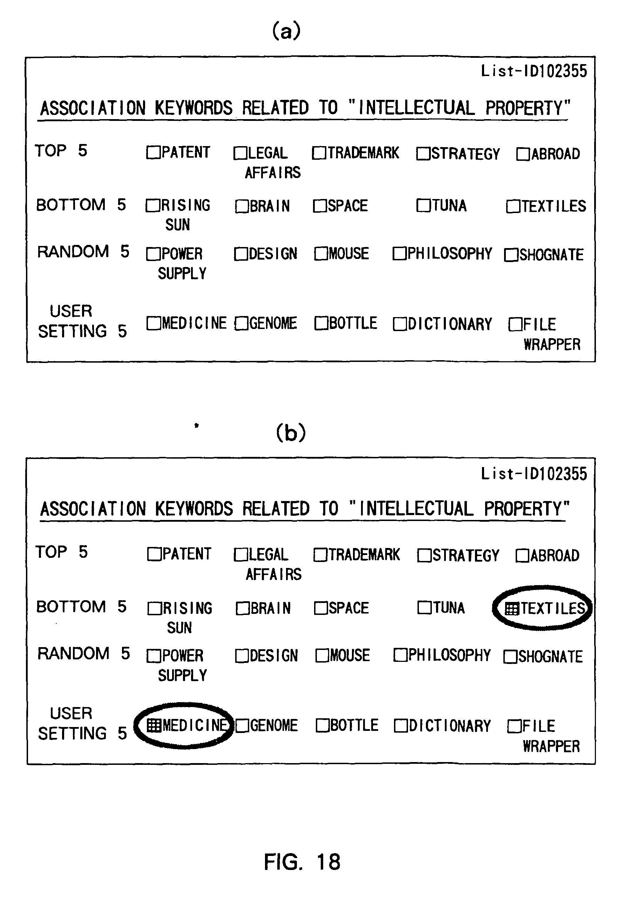

That is, from the information recorded in the relevance table exemplified in Fig. 17, at least one of: the IDs of several association keywords that are relatively high in association degree (appearance frequency); the IDs of several association keywords that are relatively low in association degree; the IDs of several association keywords that are relatively high in utilization degree (cumulative value of detection count); the IDs of several association keywords that are relatively low in utilization degree; the IDs of association keywords within the range of the association degree or the utilization degree specified by the terminal device 1 that has originated the search request, is identified, and the list of the association keywords corresponding to the identified ID is generated. The list of the generated association keywords is shown in Fig. 18(a) as an example. In the figure, "List-ID 102355" shown on the top right is the list ID.

In Fig. 18(a), "top 5" indicates the top five association keywords that are highest in association degree with respect to the subject keyword "intellectual property", "bottom 5" indicates the bottom five association keywords that are lowest in association degree with respect to the subject keyword ""intellectual property" , "random 5" indicates five association keywords whose association degrees or utilization degrees are identified by random numbers generated by the random number generation device 232, and "user setting 5" indicates five association keywords identified by the condition (for example, higher-ranked utilization degree, same section and higher-ranked association degree, or the like) set by the user upon the search request. Fig. 18(b) shows a state where the user has adopted two search keywords "textiles" and "medicine" from such a list. The IDs of "textiles" and "medicine" are transmitted to the server device 2 along with the list ID, thereby causing the server device 2 to cumulatively record the utilization degrees (times) in the relevance table.

By transmitting the above-mentioned list to the originator of the search request, it is possible to provide the originator user with an opportunity to come across heterogeneous information of which even the user has been unaware. Accordingly, the information search can be made wider than the conventional type of search method with which only homogeneous information can be obtained, and such a remarkable effect can be expected as to be able to greatly increase the choices regarding the resource exploitation.

Note that the keywords exemplified in Figs. 18(a) and (b) are each composed of two or three characters for convenience, but the number of characters is optional. In addition, there is no need to limit the number of association keywords to five.

The present invention has been described above based on the plurality of embodiments, but the network system according to the present invention can be implemented by using not only the information processing device existing separately as the server device 2 but also a device obtained by adding a server function to the terminal device 1.

Further, the above description takes the business resource as an example of the resource to be exploited, but the present invention can be applied similarly to resources used for public purposes that are not always linked directly to business.

## Claims

1. An exploitation supporting method for a resource, which is executed by a server device and a plurality of user devices that are connected with one another via a network, comprising the steps of:
converting, by a first user device operated by a user who is a possible demander of the resource to be an exploitation target and a second user device operated by a user who is a possible supplier of the resource, a feature of the resource into a quantitative data group, respectively, in a data format recognizable for the server device through quantification based on a plurality of types of assessment rules different in viewpoint from one another, and converting feature information for notifying another user of the resource into common data in a data format recognizable for the server device and another user device, to transmit the quantitative data group and the common data to the server device along with a demand/supply ID for identifying the demander or the supplier of the resource; and
accumulating, by the server device, the quantitative data groups and the common data received from the first user device and the second user device in a predetermined storage device in association with the respective demand/supply IDs, and determining a matching degree between demand and supply of the resource by making, for each pair of the demander and the supplier identified by the demand/supply IDs, a comparison of the features represented by the accumulated quantitative data groups, to enable providing the first user device with the common data of the supplier whose matching degree is within a predetermined range and, on the other hand, to enable providing the second user device with the common data of the demander whose matching degree is within the predetermined range.

2. An exploitation supporting method according to claim 1, wherein:
the first user device and the second user device each transmit, to the server device, an indirect ID for indirectly identifying an attribute of the user operating the user device; and
the server device is configured to:
accumulate the indirect ID received from each of the user devices in the storage device in association with the common data from the user device in question; and
enable, when providing the common data of the supplier to the first user device, providing the indirect ID of the supplier in question and conceal the indirect ID of another demander, and enable, on the other hand, when providing the common data of the demander to the second user device, providing the indirect ID of the demander in question and conceal the indirect ID of another supplier.

3. An exploitation supporting method according to claim 2, wherein the server device is configured to:
acquire at least one of assessment information indicating an assessment result of a third party with respect to the resource of the supplier and supporting information indicating an example of an exploitation mode of the resource in question, to accumulate the acquired assessment information or the acquired supporting information in the storage device in association with the common data of the supplier; and
enable, when providing the common data in question, providing the at least one of the assessment information and the supporting information therewith.

4. An exploitation supporting method according to any one of claims 1 to 3, wherein:
the server device includes:
a keyword DB storing a plurality of keywords regarding exploitation of the resource; and
a relevance table associating, for each of the keywords, IDs of a plurality of association keywords associated with the keyword in question with respective appearance frequencies in source document data; and
the server device extracts, from the keyword DB, upon reception of a search request along with a search keyword candidate from the first user device or the second user device, based on recorded information of the relevance table, some association keywords that are associated with the keyword matching the search keyword candidate in question and have the appearance frequency within a predetermined range, to enable providing each of the extracted association keywords, as a potential search keyword, to the user device that is a transmission source of the search request.

5. An exploitation supporting method according to claim 4, wherein the server device records, every time detection is made that any one of the association keywords provided to the user device of the transmission source has been adopted as a search keyword, information indicating a utilization degree of the association keyword in a field of the relevance table associated with the ID of the association keyword in question.

6. An exploitation supporting method according to claim 5, wherein the server device identifies, from the recorded information of the relevance table, at least any one of some association keywords with relatively high appearance frequencies, some association keywords with relatively low appearance frequencies, and association keywords having the appearance frequencies within a range specified by the user device of the transmission source, to extract the identified association keywords.

7. An information processing device constituting a network system for resource exploitation support along with a server device connected via a network, comprising:
first data converting means for allowing a user operating an own device to convert a feature of a resource to be a demand target or a supply target into a quantitative data group in a data format recognizable for the server device through quantification based on a plurality of types of assessment rules different in viewpoint from one another;
second data converting means for converting feature information for allowing another user to recognize the resource into common data in a data format recognizable for the server device and another information processing device;
communication means for transmitting the quantitative data group and the common data to the server device along with a demand/supply ID for identifying a demander or a supplier of the resource, and receiving any one of supplier information including the common data of the supplier and demander information including the common data of the demander from the server device that has made, for each pair of the demander and the supplier identified by the demand/supply IDs, a comparison of the features represented by the quantitative data groups; and
output control means for enabling the supplier information or the demander information received by the communication means to be presented to the user via a predetermined output device.

8. An information processing device according to claim 7, further comprising an association supporting DB that has accumulated serendipity information, the serendipity information being information set for each keyword and associable with the keyword in question, and being selected by a person other than the user or generated as a result of an action of the person other than the user,
wherein the second data generating means extracts, from the association supporting DB, the serendipity information corresponding to the keyword contained in the feature information, and puts the extracted serendipity information in the feature information in question to convert the feature information into the common data.

9. An information processing device according to claim 8, wherein the first data generating means extracts, from the association supporting DB, the serendipity information corresponding to the keyword contained in the feature of the resource, and puts the extracted serendipity information in the feature of the resource in question to convert the feature of the resource into the quantitative data group.

10. An information processing device constituting a network system for resource exploitation support along with a plurality of user devices, comprising:
reception means for receiving, from each of the user devices, a quantitative data group obtained by quantitatively converting a feature of a resource to be a demand target or a supply target into a data format recognizable for an own device based on a plurality of types of assessment rules different in viewpoint from one another, and common data obtained by converting feature information for allowing another user device to recognize the resource into a data format recognizable for the own device and the another user device, along with a demand/supply ID for identifying a demander or a supplier of the resource;
a demand/supply DB for accumulating the quantitative data group and the common data received from the each of the user devices in association with the demand/supply ID; and
demand/supply management means for determining a matching degree between demand and supply by making, for each pair of the demander and the supplier identified by the demand/supply IDs, a comparison of the features represented by the quantitative data groups accumulated in the demand/supply DB, to enable providing the user device concerning the demander with supplier information including the common data of the supplier whose matching degree is within a predetermined range and, on the other hand, to enable providing the user device concerning the supplier with demander information including the common data of the demander whose matching degree is within the predetermined range.

11. An information processing device according to claim 10, wherein the demand/supply management means conceals, if the demander of the resource includes a plurality of demanders, other demander information when providing the supplier data, and conceals on the other hand, if the supplier of the resource includes a plurality of suppliers, other supplier information when providing the common data of the demander.

12. An information processing device according to claim 10, further comprising:
a keyword DB for storing a plurality of keywords along with IDs for identifying the respective keywords;
keyword management means for determining any one of the keywords stored in the keyword DB as a subject keyword and determining, from among a plurality of keywords excluding the subj ect keyword that have been extracted from source document data, each keyword identical to one of the keywords stored in the keyword DB as an association keyword, to derive an appearance frequency of each association keyword in the source document data;
table management means for extracting, from the keyword DB, the ID of the subject keyword and the ID of the derived each association keyword, respectively, and associating the subject keyword with the ID of the each association keyword and the appearance frequency derived with respect to the each association keyword, to generate a relevance table indicating relevance between the subject keyword in question and the each association keyword or update recorded information of the relevance table;
keyword candidate reception means for receiving an input of a search keyword candidate for searching for information regarding the resource exploitation support; and
search means for examining whether or not the relevance table of the subject keyword matching the search keyword candidate received by the keyword candidate reception means is present, and when present, extracting from the keyword DB, based on a plurality of the IDs recorded in the relevance table in question, the association keywords corresponding to the respective IDs, to provide each of the extracted association keywords as a potential search keyword that can be adopted as the search keyword to a transmission source of the search keyword candidate.

13. An information processing device according to claim 12, wherein the keyword management means counts the appearance frequencies of a plurality of extract keywords in a subject field, which have been extracted from the subject field in question of the source document data, and performs a search as to whether or not the keyword identical to one of the extract keywords is stored in the keyword DB to determine, when stored, the keyword identical to the extract keyword with a highest appearance frequency as the subject keyword.

14. An information processing device according to claim 13, further comprising detection means for detecting that any one of the respective association keywords provided to the transmission source has been adopted as the search keyword,
wherein the table management means cumulatively records a detection count by the detection means in the relevance table in association with the ID of the association keyword in question.

15. An information processing device according to claim 14, wherein the search means identifies, from the recorded information of the relevance table, at least any one of the IDs of some association keywords with relatively high appearance frequencies, the IDs of some association keywords with relatively low appearance frequencies, the IDs of some association keywords with relatively high cumulative values of the detection count, the IDs of some association keywords with relatively low cumulative values, and the IDs of the association keywords within a range specified by the transmission source with respect to the appearance frequency or the cumulative value, to extract the association keywords corresponding to the specified IDs from the keyword DB.

16. A computer program for causing a computer to operate as a user device constituting a network system for resource exploitation support along with a server device connected via a network, the computer program for resource exploitation causing the computer to function as:
first data converting means for allowing a user operating an own device to convert a feature of a resource to be a demand target or a supply target into a quantitative data group in a data format recognizable for the server device through quantification based on a plurality of types of assessment rules different in viewpoint from one another;
second data converting means for converting feature information for allowing another user to recognize the resource into common data in a data format recognizable for the server device and another information processing device;
communication means for transmitting the quantitative data group and the common data to the server device along with a demand/supply ID for identifying a demander or a supplier of the resource, respectively, and receiving any one of supplier information including the common data of the supplier and demander information including the common data of the demander from the server device that has made, for each pair of the demander and the supplier identified by the demand/supply IDs, a comparison of the features represented by the quantitative data groups; and
output control means for enabling the supplier information or the demander information received by the communication means to be presented to the user via a predetermined output device.

17. A computer program for causing a computer having a storage device to operate as a server device constituting a network system for resource exploitation support along with a plurality of user devices accessible via a network, the computer program for resource exploitation support, being for establishing a demand/supply DB in the storage device, and causing the computer to function as:
reception means for receiving, from each of the user devices, a quantitative data group obtained by converting a feature of a resource to be a demand target or a supply target into a data format recognizable for an own device based on a plurality of types of assessment rules different in viewpoint from one another, and common data obtained by converting feature information for allowing another user device to recognize the resource into a data format recognizable for the own device and the another user device, along with a demand/supply ID for identifying a demander or a supplier of the resource;
DB management means for accumulating the quantitative data group and the common data received from the each of the user devices in association with the demand/supply ID in the demand/supply DB; and
demand/supply management means for determining a matching degree between demand and supply by making, for each pair of the demander and the supplier identified by the demand/supply IDs, a comparison of the features represented by the quantitative data groups accumulated in the demand/supply DB, to enable providing the user device concerning the demander with supplier information including the common data of the supplier whose matching degree is within a predetermined range and, on the other hand, to enable providing the user device concerning the supplier with demander information including the common data of the demander whose matching degree is within the predetermined range.
